# EUROPEAN PATENT SPECIFICATION

(11) **EP 3 779 780 B1**
(45) Date of publication and mention of the grant of the patent: **28.02.2024**
(21) Application number: 20198076.0
(22) Date of filing: 26.01.2018
(51) Int. Cl.: G06V 40/16

(54) **IMPLEMENTATION OF BIOMETRIC AUTHENTICATION WITH FIRST AND SECOND FORM OF AUTHENTICATION**
IMPLEMENTIERUNG DER BIOMETRISCHEN AUTHENTIFIZIERUNG MIT ERSTER UND ZWEITER FORM DER AUTHENTIFIZIERUNG
LA MISE EN OEUVRE DE L'AUTHENTIFICATION BIOMÉTRIQUE AVEC UNE PREMIÈRE ET UNE DEUXIÈME FORME D'AUTHENTIFICATION

(30) Priority: 09.09.2017 US 201762556413 P; 11.09.2017 US 201762557130 P; 22.09.2017 DK PA201770712; 22.09.2017 DK PA201770713; 22.09.2017 DK PA201770714; 22.09.2017 DK PA201770715; 02.11.2017 US 201762581025 P
(43) Date of publication of application: 17.02.2021
(62) Divisional of application: 18713408.5
(73) Proprietor: Apple Inc., Cupertino, CA 95014 (US)
(72) Inventor: VAN OS, Marcel, Cupertino, California 95014 (US); ANTON, Peter, D., Cupertino, California 95014 (US); DEVINE, Lynne, Cupertino, California 95014 (US); BEHZADI, Arian, Cupertino, California 95014 (US); DASCOLA, Jonathan R., Cupertino, California 95014 (US); DYE, Alan, C., Cupertino, California 95014 (US); FOSS, Christopher, Patrick, Cupertino, California 95014 (US); GRIFFIN, Bradley, W., Cupertino, California 95014 (US); IVE, Jonathan P., Cupertino, California 95014 (US); MALIA, Joseph A., Cupertino, California 95014 (US); MARI, Pedro, Cupertino, California 95014 (US); MOHSENI, Daamun, Cupertino, California 95014 (US); PAUL, Grant R., Cupertino, California 95014 (US); PRESTON, Daniel, Trent, Cupertino, California 95014 (US); TYLER, William M., Cupertino, California 95014 (US)
(74) Representative: COPA Copenhagen Patents

(56) References cited:
- EP-A1- 2 713 298
- WO-A1-2015/062382
- GB-A- 2 500 321
- US-A1- 2015 363 632
- US-B1- 8 254 647

## Description

### FIELD

The present disclosure relates generally to biometric authentication, and more specifically to interfaces and techniques for enrollment and authentication of biometric features. In particular, the present invention relates to a method for providing biometrical authentication. The claimed invention further relates to an electronic device as well as a computer readable storage medium storing one or more programs, which when executed are configured to carry out the method.

### BACKGROUND

Biometric authentication, for instance of a face, iris, or fingerprint, using electronic devices is a convenient and efficient method of authenticating users of the electronic devices. Biometric authentication allows a device to quickly and easily verify the identity of any number of users. EP 2 713 298 A1 describes a method for operating a display apparatus including acquiring biometric information about a user through a camera or a sensor unit, comparing the acquired biometric information with pre-stored authentication information, and switching the display apparatus to a first mode, if the acquired biometric information does not match with the pre-stored authentication information, the first mode restricting access to content predetermined from total content. US 2015/363632 A1 describes a method for controlling a mobile terminal, wherein the touch input is processed to determine whether the touch input is an input by a finger of a user, and accordingly providing a different user interface for authentication.

### BRIEF SUMMARY

Some techniques for implementing biometric authentication using electronic devices, however, are generally cumbersome. For example, some existing techniques, such as those directed to facial recognition, require a user to almost perfectly align a biometric feature in a same manner during both enrollment and each iteration of authentication. Deviation from the alignment of the biometric feature often results in a false negative result. As a result, a user is, optionally, required to unnecessarily perform multiple iterations of biometric authentication, or is, optionally, discouraged from using the biometric authentication altogether. As another example, some existing techniques rely solely on a two-dimensional representation of a biometric feature. As a result, authentication of a user is, optionally, limited by virtue of a failure to analyze one or more three-dimensional characteristics of the biometric feature and also optionally requires a user to unnecessarily perform additional iterations of biometric authentication. In view of the foregoing drawbacks, existing techniques require more time than necessary, wasting both user time and device energy. This latter consideration is particularly significant in the operation of battery-operated devices.

Accordingly, the present technique provides electronic devices with faster, more efficient methods and interfaces for implementing biometric authentication. Such methods and interfaces optionally complement or replace other methods for implementing biometric authentication. Such methods and interfaces reduce the cognitive burden on a user and produce a more efficient human-machine interface. For battery-operated computing devices, such methods and interfaces conserve power and increase the time between battery charges. Such methods and interfaces also reduce the number of unnecessary, extraneous, or repetitive input required at computing devices, such as smartphones and smartwatches. The invention is defined by the independent claims. The dependent claims define advantageous embodiments. These embodiments and additional non-claimed embodiments, which are examples of related techniques to help understand the claimed invention, are further described below. The described embodiments are not to be regarded as necessarily defining the invention, unless they fall within the scope of the claims.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for implementing biometric authentication, thereby increasing the effectiveness, efficiency, and user satisfaction with such devices. Such methods and interfaces optionally complement or replace other methods for implementing biometric authentication.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIGS 1A-1B illustrate components of an electronic device.
FIGS. 26A-26AS illustrate exemplary user interfaces for providing interstitial user interfaces during biometric authentication.
FIGS. 27A-27E are a flow diagram illustrating methods of providing interstitial user interfaces during biometric authentication.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for implementing biometric authentication of biometric features. For example, there is a need for electronic devices that provide a convenient and efficient method for enrolling one or more portions of a biometric feature. For another example, there is a need for electronic devices that provide a quick and intuitive technique for selectively accessing secure data in accordance with biometric authentication. For another example, there is a need for electronic devices that provide a quick and intuitive technique for enabling a function of a device in accordance with biometric authentication. Such techniques can reduce the cognitive burden on a user who enrolls a biometric feature and/or biometrically authenticates with a device, thereby enhancing overall productivity. Further, such techniques can reduce processor and battery power otherwise wasted on redundant user inputs.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad).

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that is, in some circumstances, otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user. Using tactile outputs to provide haptic feedback to a user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some embodiments, a tactile output pattern specifies characteristics of a tactile output, such as the amplitude of the tactile output, the shape of a movement waveform of the tactile output, the frequency of the tactile output, and/or the duration of the tactile output.

When tactile outputs with different tactile output patterns are generated by a device (e.g., via one or more tactile output generators that move a moveable mass to generate tactile outputs), the tactile outputs can invoke different haptic sensations in a user holding or touching the device. While the sensation of the user is based on the user's perception of the tactile output, most users will be able to identify changes in waveform, frequency, and amplitude of tactile outputs generated by the device. Thus, the waveform, frequency and amplitude can be adjusted to indicate to the user that different operations have been performed. As such, tactile outputs with tactile output patterns that are designed, selected, and/or engineered to simulate characteristics (e.g., size, material, weight, stiffness, smoothness, etc.); behaviors (e.g., oscillation, displacement, acceleration, rotation, expansion, etc.); and/or interactions (e.g., collision, adhesion, repulsion, attraction, friction, etc.) of objects in a given environment (e.g., a user interface that includes graphical features and objects, a simulated physical environment with virtual boundaries and virtual objects, a real physical environment with physical boundaries and physical objects, and/or a combination of any of the above) will, in some circumstances, provide helpful feedback to users that reduces input errors and increases the efficiency of the user's operation of the device. Additionally, tactile outputs are, optionally, generated to correspond to feedback that is unrelated to a simulated physical characteristic, such as an input threshold or a selection of an object. Such tactile outputs will, in some circumstances, provide helpful feedback to users that reduces input errors and increases the efficiency of the user's operation of the device.

In some embodiments, a tactile output with a suitable tactile output pattern serves as a cue for the occurrence of an event of interest in a user interface or behind the scenes in a device. Examples of the events of interest include activation of an affordance (e.g., a real or virtual button, or toggle switch) provided on the device or in a user interface, success or failure of a requested operation, reaching or crossing a boundary in a user interface, entry into a new state, switching of input focus between objects, activation of a new mode, reaching or crossing an input threshold, detection or recognition of a type of input or gesture, etc. In some embodiments, tactile outputs are provided to serve as a warning or an alert for an impending event or outcome that would occur unless a redirection or interruption input is timely detected. Tactile outputs are also used in other contexts to enrich the user experience, improve the accessibility of the device to users with visual or motor difficulties or other accessibility needs, and/or improve efficiency and functionality of the user interface and/or the device. Tactile outputs are optionally accompanied with audio outputs and/or visible user interface changes, which further enhance a user's experience when the user interacts with a user interface and/or the device, and facilitate better conveyance of information regarding the state of the user interface and/or the device, and which reduce input errors and increase the efficiency of the user's operation of the device.

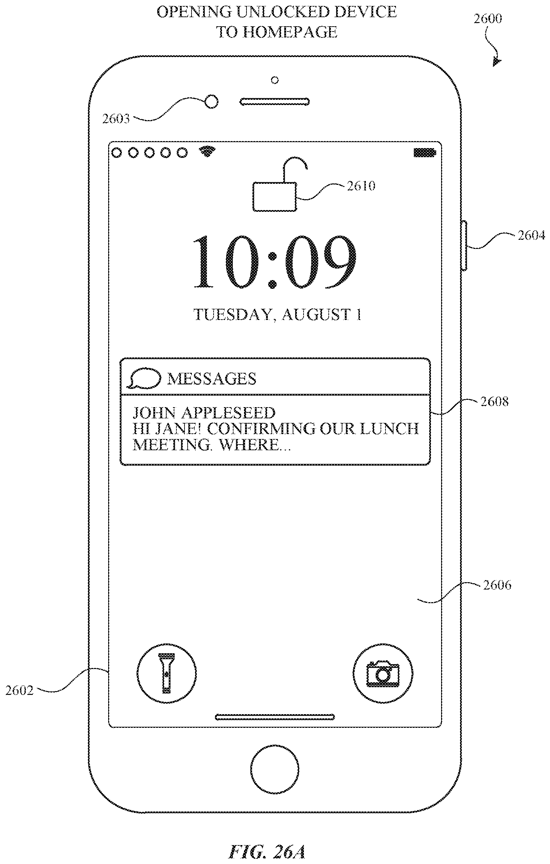

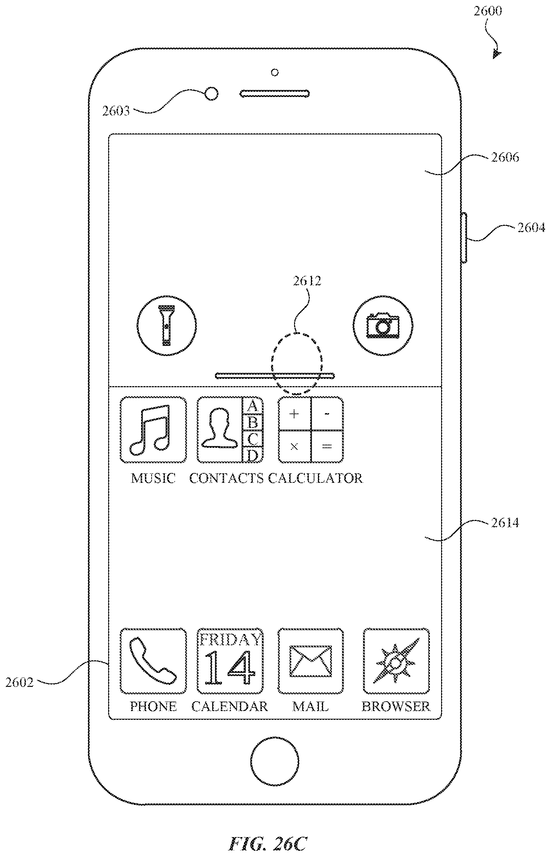

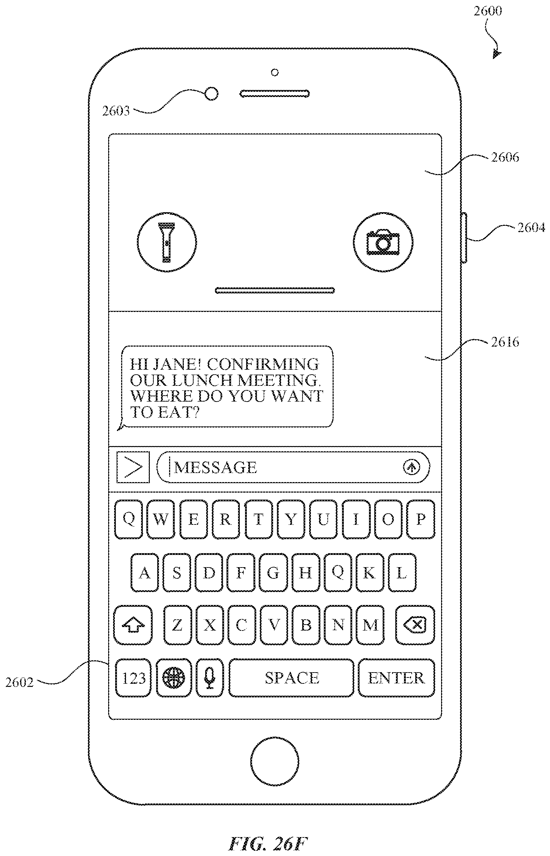

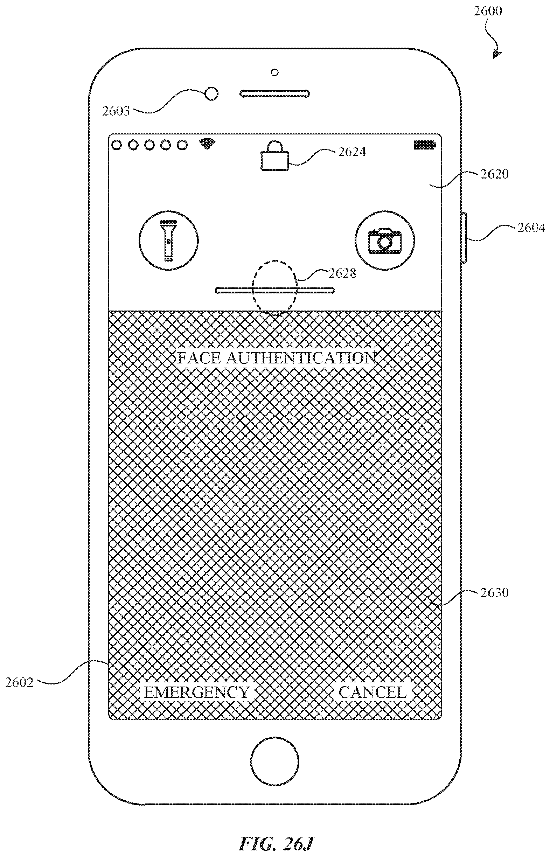

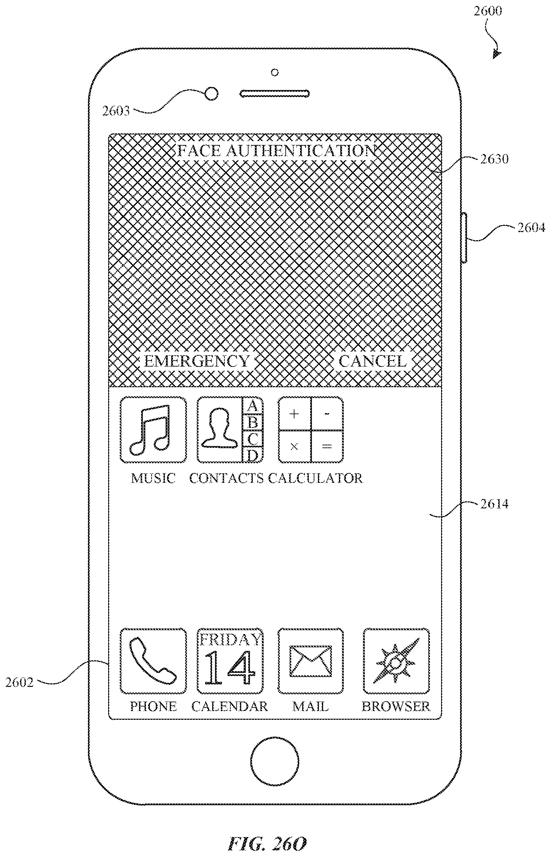

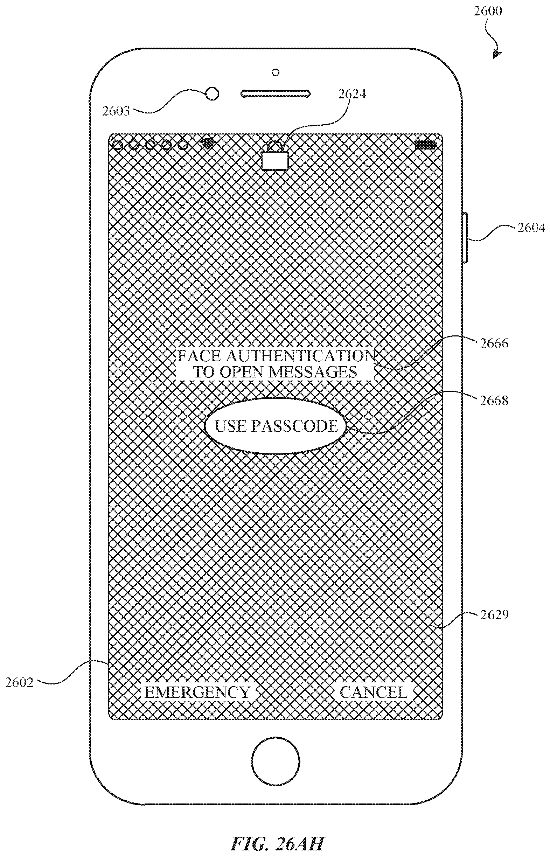

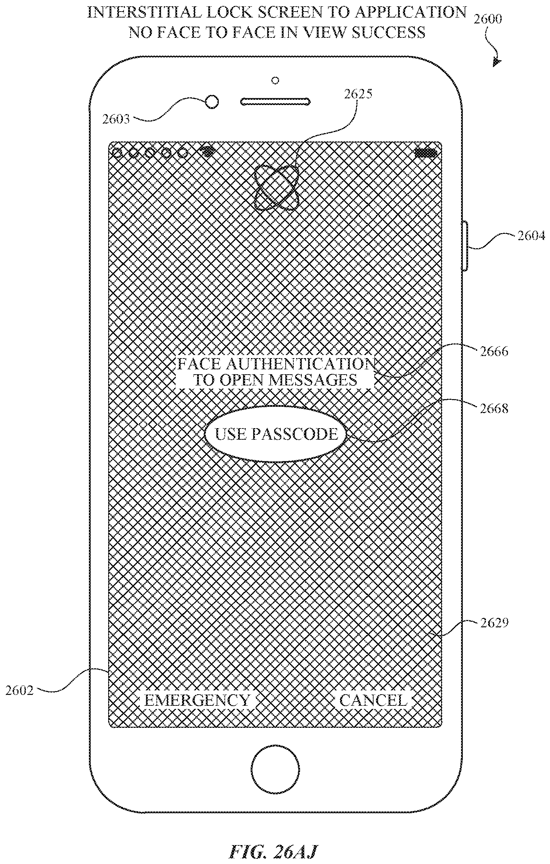

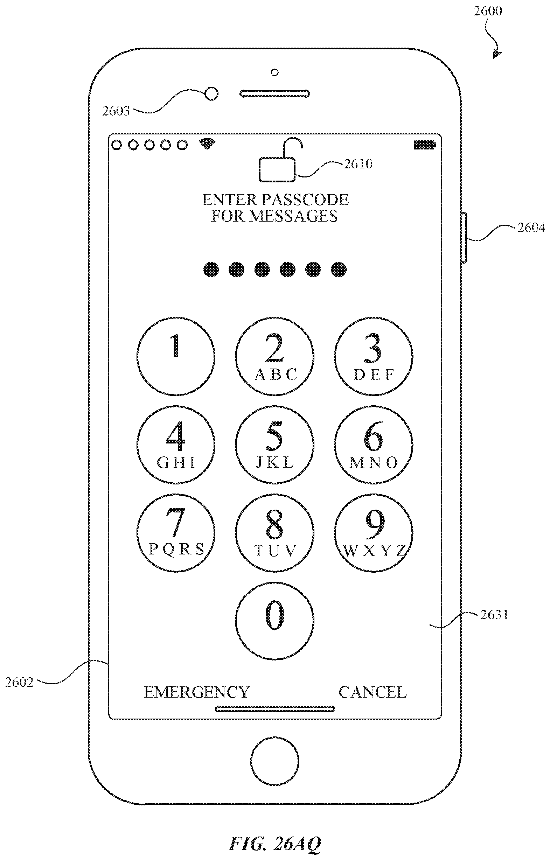

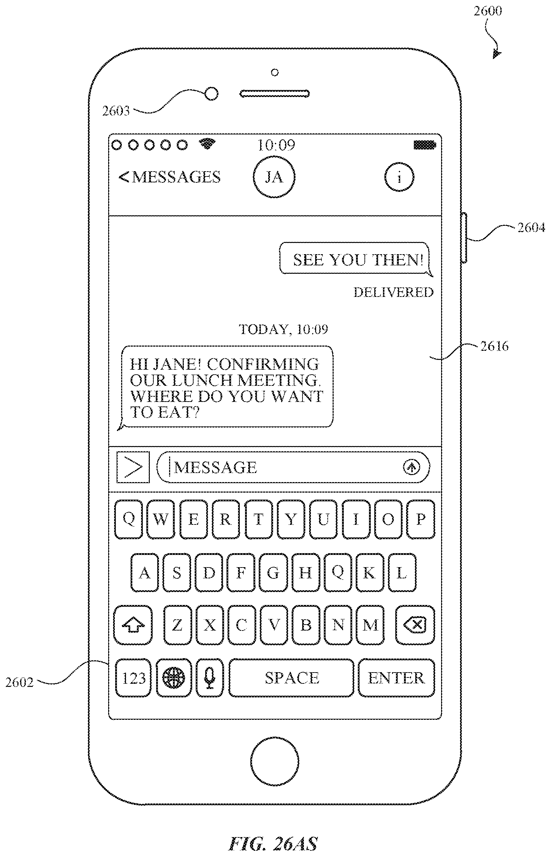

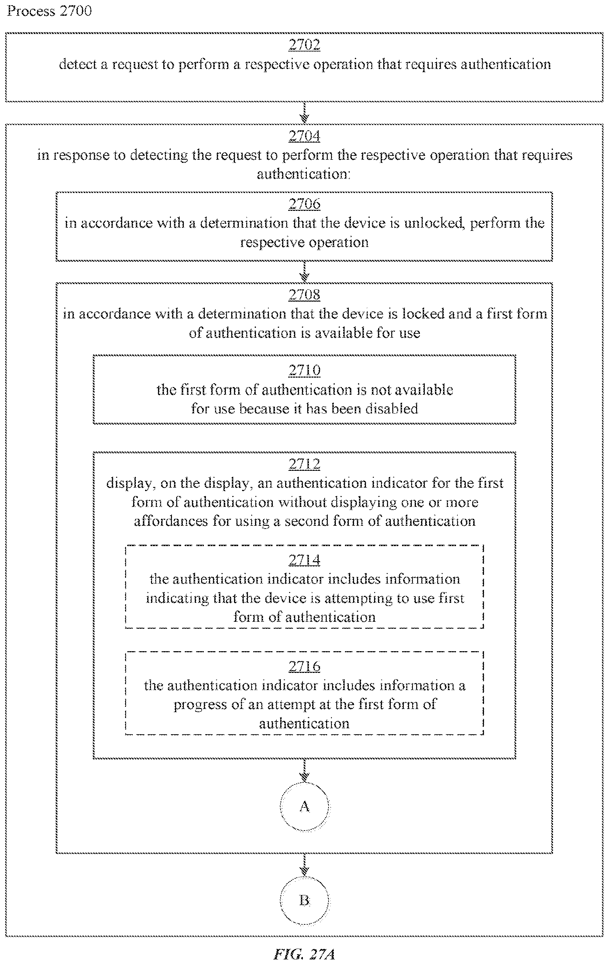

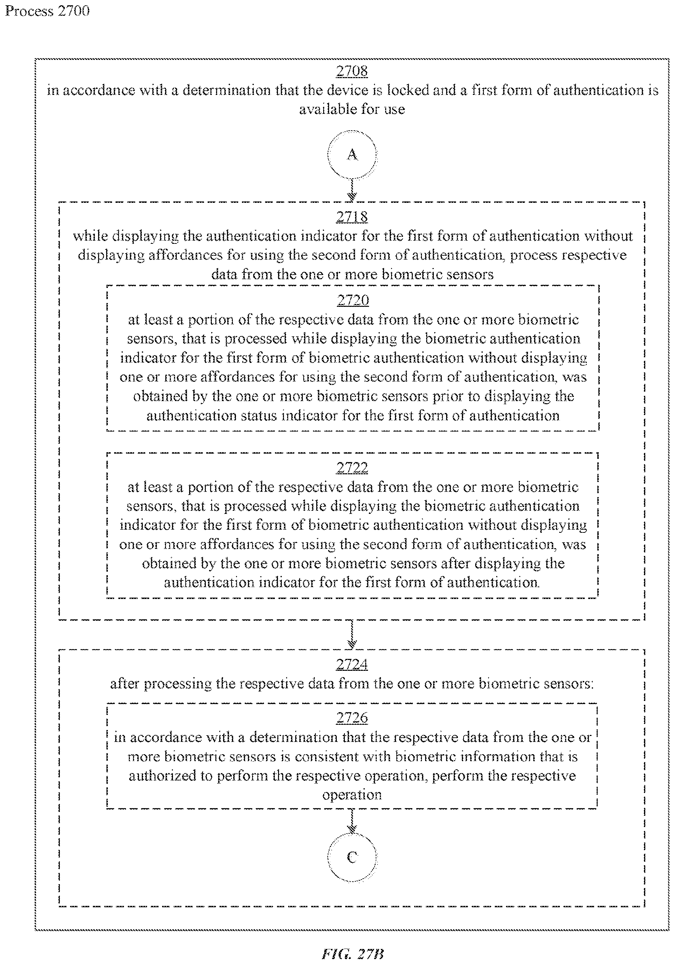

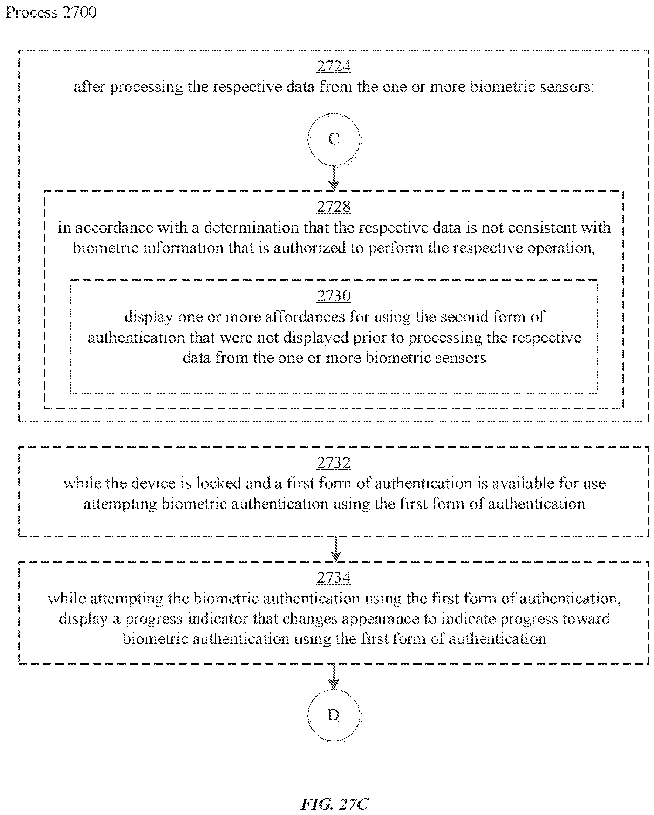

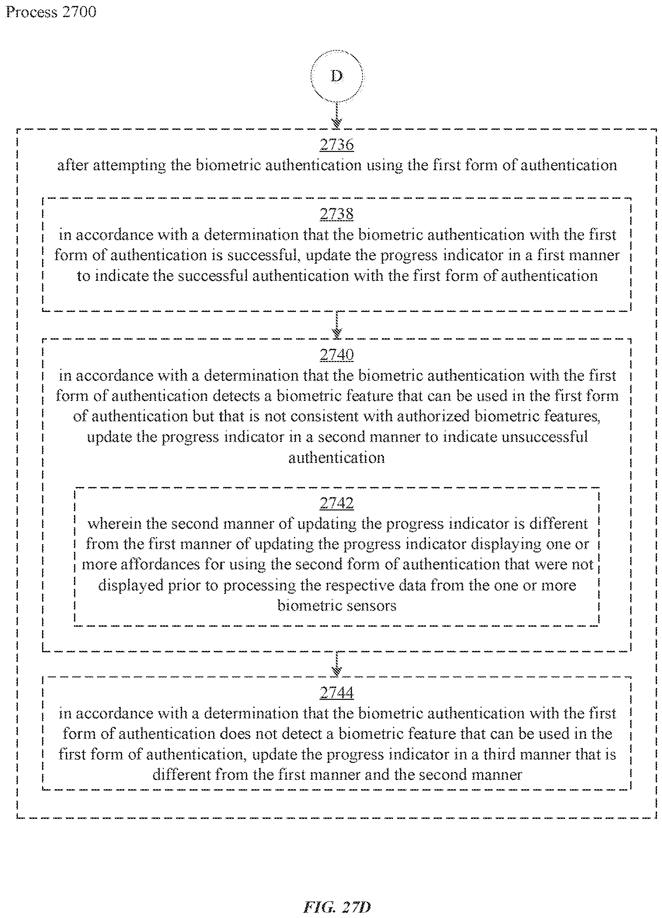

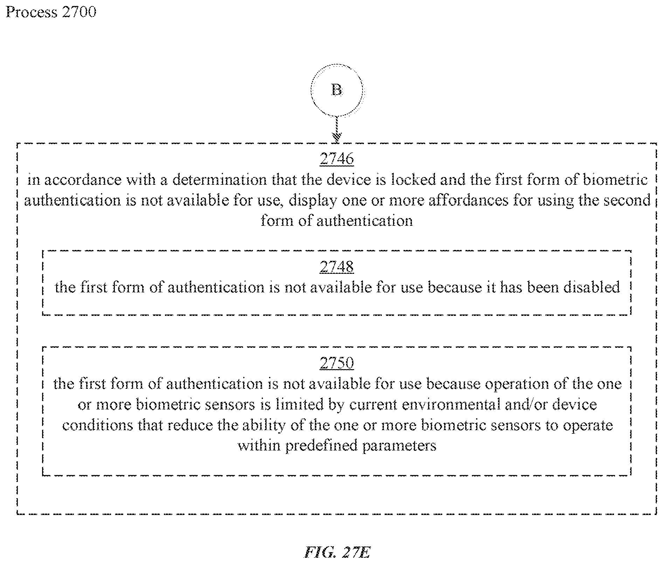

FIGS. 26A-26AS illustrate exemplary user interfaces for biometric authentication, in accordance with some embodiments. As described in greater detail below, the non-limiting exemplary embodiment of the user interfaces illustrated in FIGS. 26A-26AS are used to illustrate the processes described below, including the processes in FIGS. 27A-27E.

FIG. 26A illustrates an electronic device 2600 (e.g., portable multifunction device 100, device 300, or device 500). In the non-limiting exemplary embodiment illustrated in FIGS. 26A-26AS, electronic device 1900 is a smartphone. In other embodiments, electronic device 1500 can be a different type of electronic device, such as a wearable device (e.g., a smartwatch). Electronic device 1900 has a display 2602, one or more input devices (e.g., touchscreen of display 2602, a button 2604, a mic (not displayed)), and a wireless communication radio. In some examples, the electronic device includes a plurality of cameras. In some examples, the electronic device includes only one camera. In some examples, the electronic device includes one or more biometric sensors (e.g., biometric sensor 2603) which, optionally, include a camera, such as an infrared camera, a thermographic camera, or a combination thereof. In some examples, the one or more biometric sensors 2603 are the one or more biometric sensors 703. In some examples, the device further includes a light-emitting device (e.g., light projector), such as an IR flood light, a structured light projector, or a combination thereof. The light-emitting device is, optionally, used to illuminate the biometric feature (e.g., the face) during capture of biometric data of biometric features by the one or more biometric sensors.

In FIG. 26A, the electronic device, while in an unlocked state, displays an unlocked interface 2606. The unlocked interface 2606 includes a notification affordance 2608 and an unlocked state indicator 2610. In some examples, because the electronic device 2600 is in an unlocked state, the notification affordance 2608 includes an indication of secured content associated with the notification affordance 2608. For example, as shown, the notification affordance is associated with a messaging application and includes at least a portion of a message received by the electronic device.

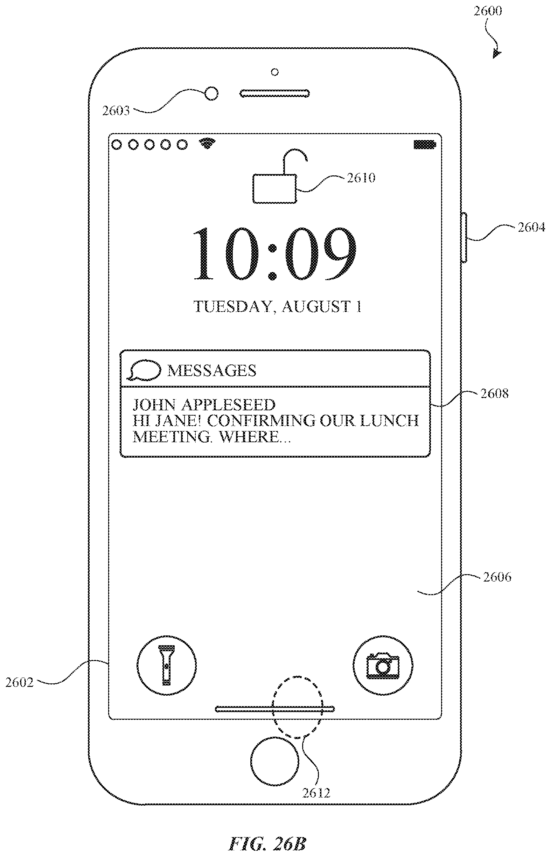

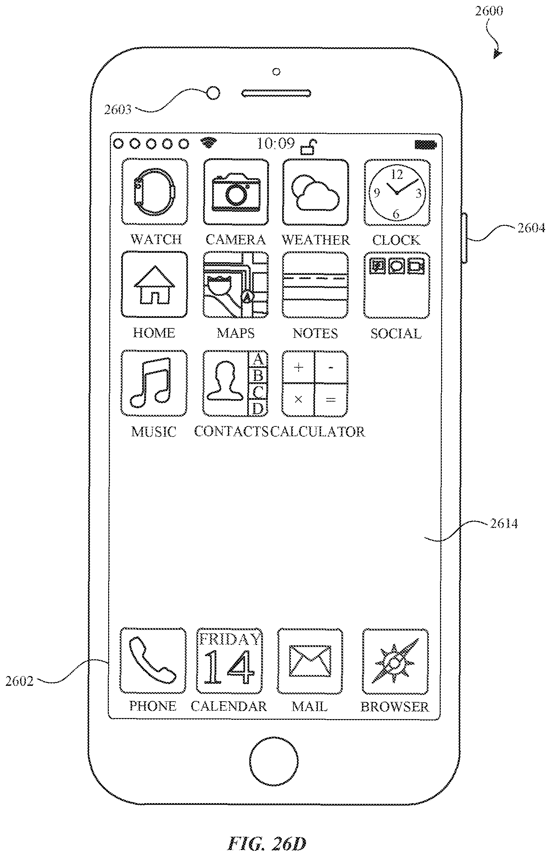

With reference to FIGS. 26B-D, while displaying the unlocked interface 2606, the electronic device 2100 detects a user input 2612 (FIG. 26B), for instance, near an edge of the display 2602. The user input 2612 is a swipe gesture that, in some examples, is a request to access a home screen interface of the electronic device 2600, and in response to the swipe input 2612, the electronic device displays (e.g., replaces display of the unlocked interface 2606 with) the home screen interface 2614 of FIG. 26D. In some examples, displaying the home screen interface 2129 includes sliding the unlocked interface 2606 in an upward direction to display (e.g., reveal) the home screen interface 2614, as analogously described with reference to FIGS. 19P-R.

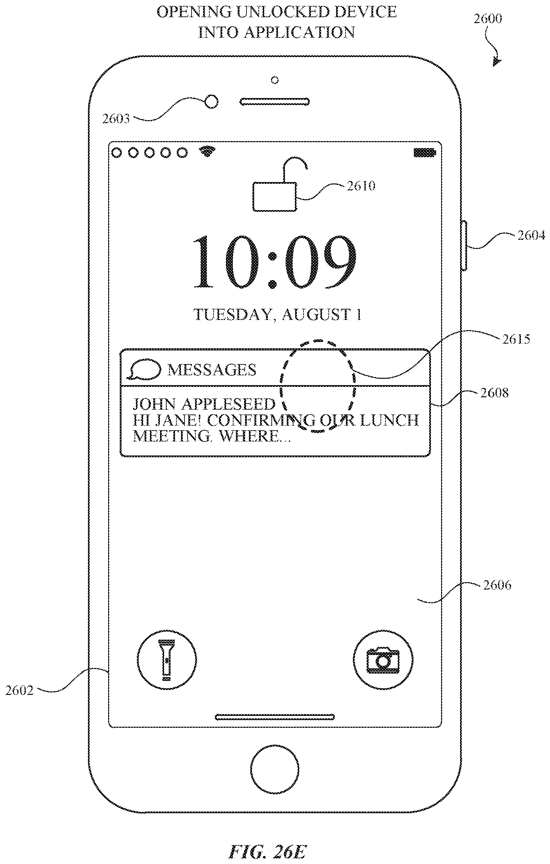

In FIG. 26E, the electronic device, while in an unlocked state, displays an unlocked interface 2606. The unlocked interface 2606 includes a notification affordance 2608 and an unlocked state indicator 2610. In some examples, because the electronic device 2600 is in an unlocked state, the notification affordance 2608 includes an indication of secured content associated with the notification affordance 2608. For example, as shown, the notification affordance is associated with a messaging application and includes at least a portion of a message received by the electronic device.

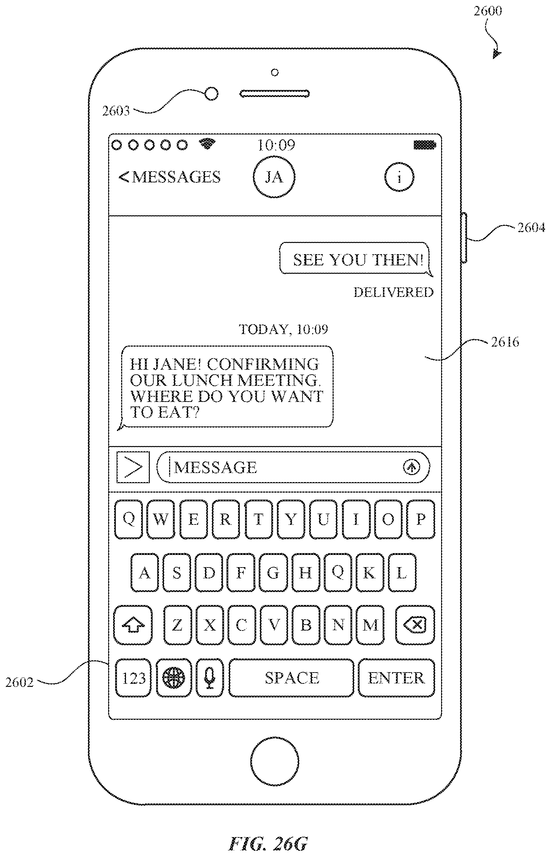

While displaying the unlocked interface 2606, the electronic device detects an activation of the notification affordance 2608. The activation of the notification affordance 2608 is a tap gesture 2615 in some examples. In response to activation of the notification affordance 2608, the electronic device displays (e.g., replaces display of the unlocked interface 2606 with) the messaging application interface 2616 of FIG. 26G. In some examples, displaying the messaging application interface 2616 includes sliding the unlocked interface 2606 in an upward direction to display (e.g., reveal) the messaging application interface 2616.

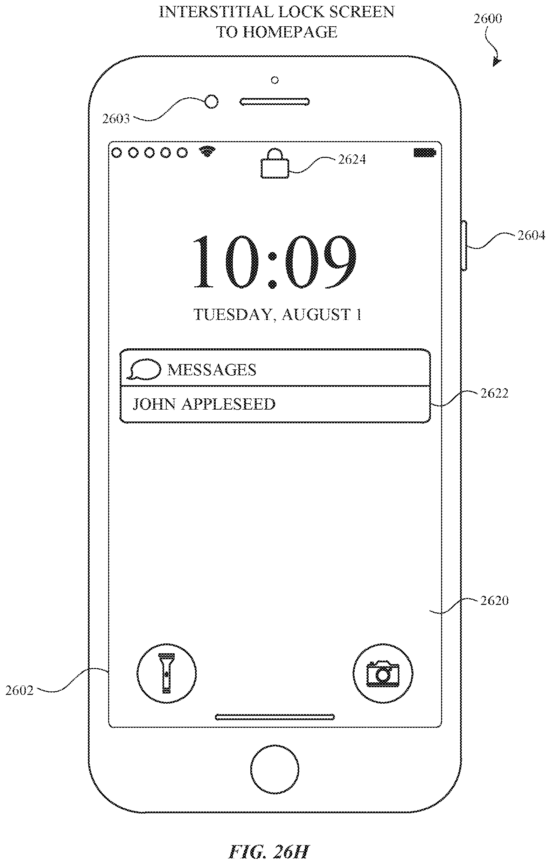

In FIG. 26H, the electronic device, while in a locked state, displays a locked interface 2620. The locked interface 2620 includes a notification affordance 2622 and a locked state indicator 2624. In some examples, because the electronic device 2600 is in a locked state, the notification affordance 2622 does not include an indication of secured content associated with the notification affordance 2622.

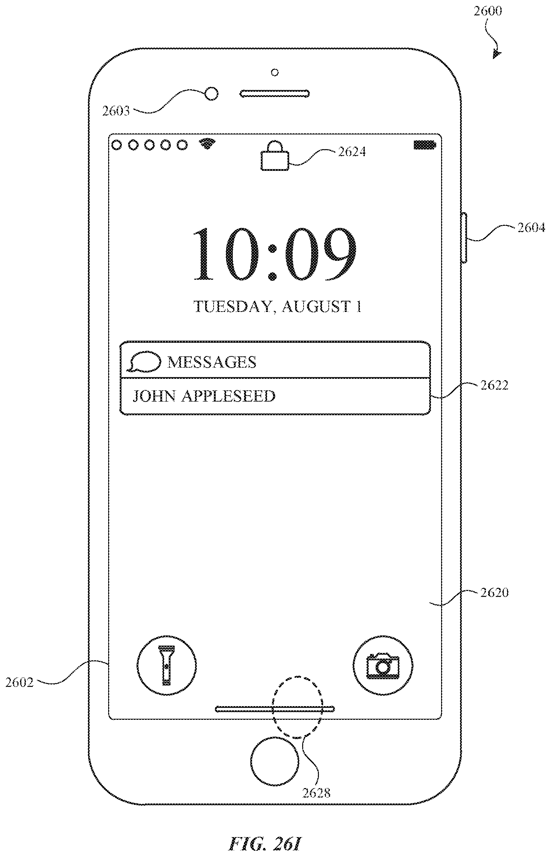

With reference to FIGS. 26I-K, while displaying the locked interface 2620, the electronic device 2600 detects a user input 2628 (FIG. 26I), for instance, near an edge of the display 2602. The user input 2628 is a swipe gesture that, in some examples, is a request to access a home screen interface of the electronic device 2600. In some examples, the electronic device 2600 receives the user input 2628 prior to completing an initial biometric authentication (e.g., biometric authentication performed in response to a wake condition).

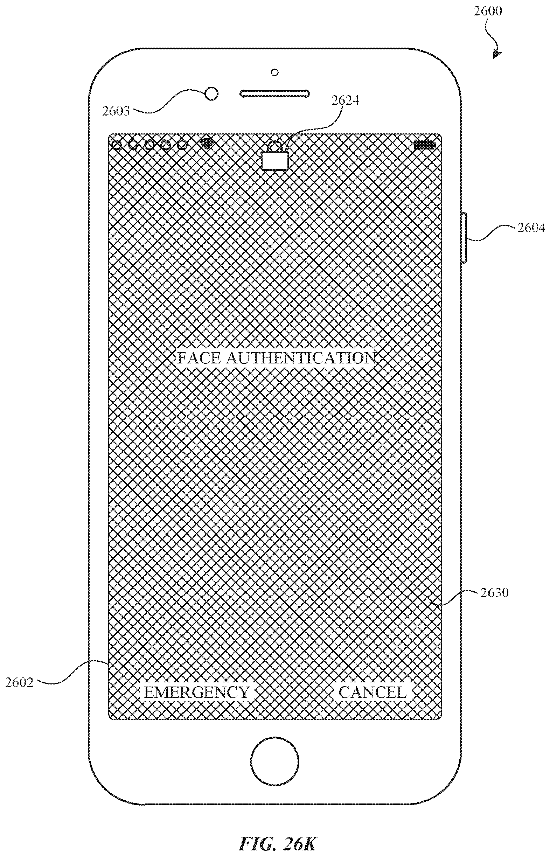

Accordingly, in response to the swipe input 2628, the electronic device displays (e.g., replaces display of the locked interface 2620 with) the interstitial interface 2630 of FIG. 26K to indicate that the electronic device has not yet completed biometric authentication. In some examples, displaying the interstitial interface 2630 includes sliding the locked interface 2620 in an upward direction to display (e.g., reveal) the interstitial interface 2630.

The interstitial interface 2630 includes a locked state indicator 2624 in some examples.

Alternatively, in some examples, the electronic device determines that a threshold number (e.g., 5) of biometric authentication attempts has been reached. Thereafter, in response to the user input 2628, the electronic device 2600 displays the interstitial interface 2632. The interstitial interface includes a biometric authentication enablement indicator indicating that biometric authentication is disabled (e.g., because the number of attempts has been reached). The interstitial interface 2632 further includes alternative authentication affordances 2636 and 2638. Activation of the alternative authentication affordance 2636 causes the electronic device to display a first alternative authentication interface, such as a fingerprint authentication interface, and activation of the alternative authentication affordance 2638 causes the electronic device to display a second alternative authentication interface, such as a passcode authentication interface.

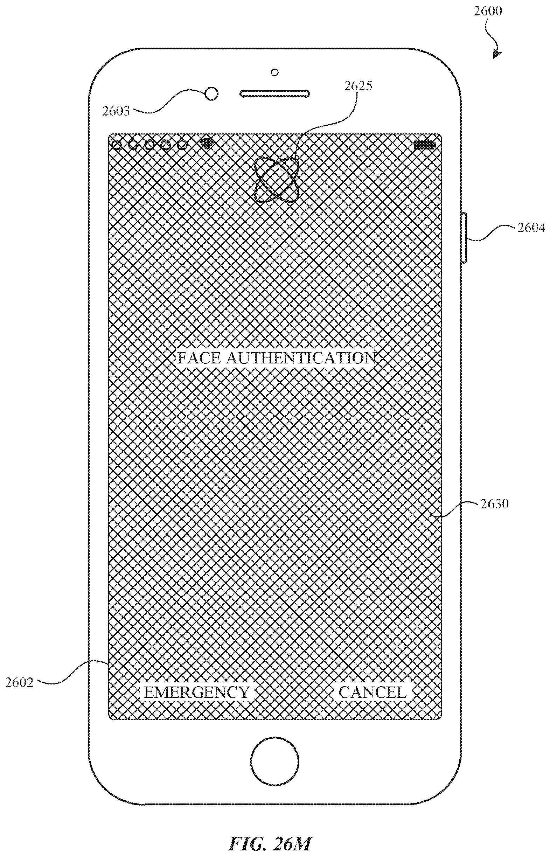

In some examples, while displaying the interstitial interface 2630, the electronic device detects biometric data (e.g., facial biometric data) and, in response, performs biometric authentication. With reference to FIG. 26M, the electronic device 2600 displays the biometric progress indicator 2625 to indicate that the biometric data is being processed.

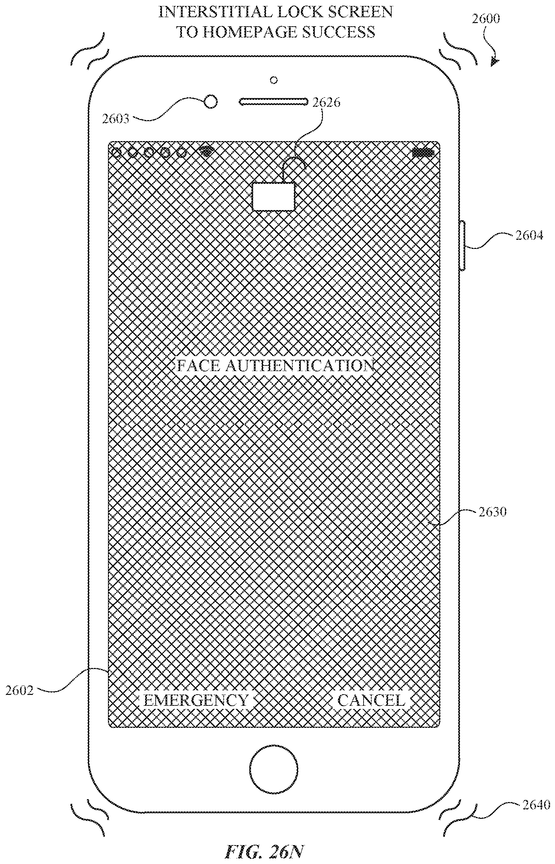

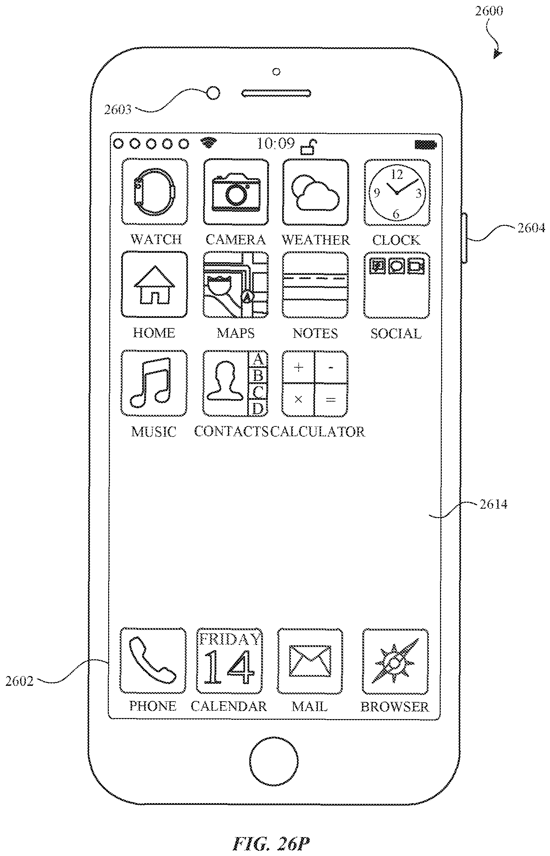

In FIG. 26N, the electronic device 2600 determines that the biometric authentication is successful. In response, the electronic device 2600 displays the unlocked state indicator 2626 and, optionally, outputs a tactile output 2640. After indicating that the biometric authentication was successful (e.g., after a predetermined amount of time), the electronic device displays (e.g., replaces display of the interstitial interface 2630 with) the home screen interface 2614 of FIG. 26P. in some examples, displaying the home screen interface 2614 includes sliding the home screen interface 2614.

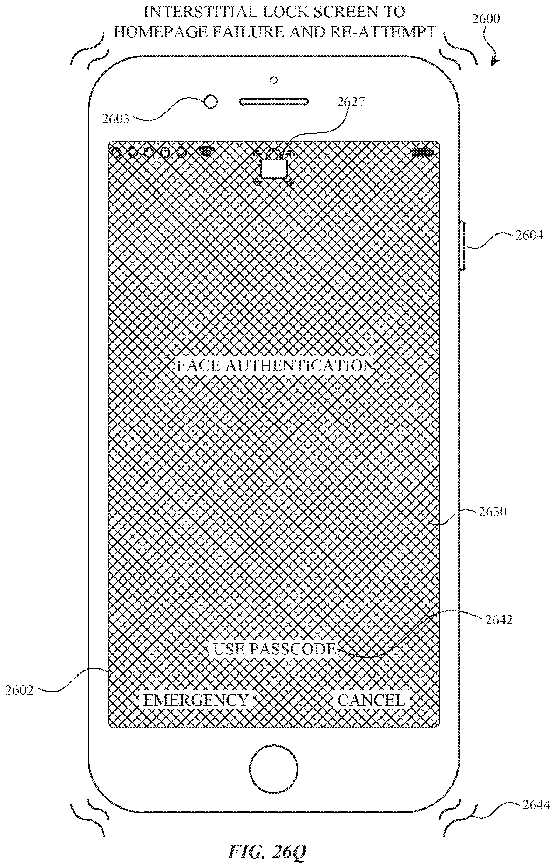

Alternatively, in FIG. 26Q, the electronic device 2600 determines that the biometric authentication was not successful. In response, the electronic device 2600 alternates a position of the locked state indicator 2627 to simulate a "shake" effect. The electronic device 2600 further outputs a tactile output 2644 to indicate the biometric authentication was unsuccessful. In some examples, the tactile output 2644 is the same as the tactile output 2640. In some examples, the tactile output 2644 is different than the tactile output 2640. In some examples, in response to determining the biometric authentication was unsuccessful, the electronic device displays an alternative authentication affordance 2642.

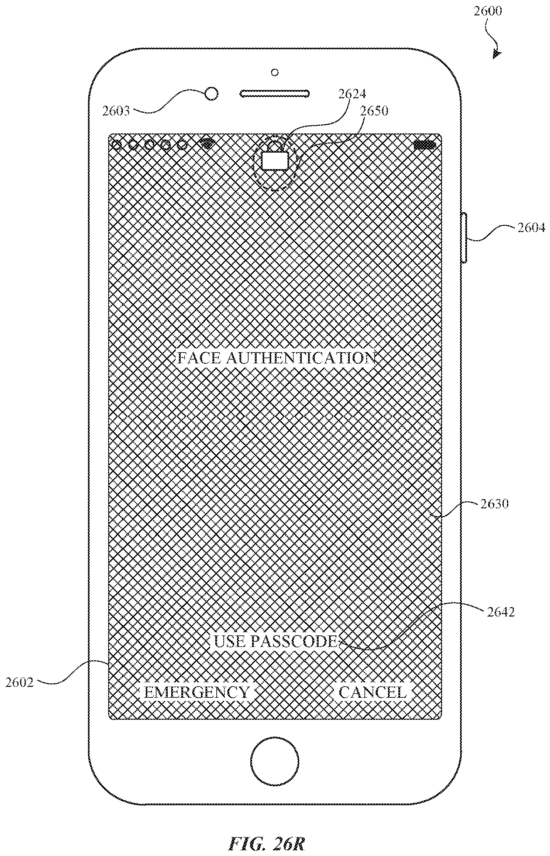

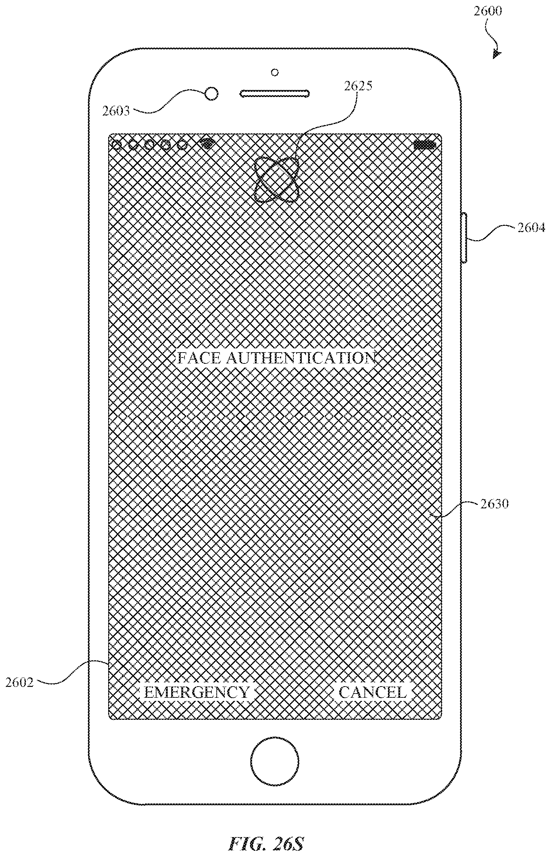

With reference to FIG. 26R, the electronic device receives an activation of the locked state indicator 2624. In some examples, activation of the locked state indicator is a tap gesture 2650 on the locked state indicator 2624. In response, as shown in FIG. 26S, the electronic device 2600 initiates biometric authentication. In some examples, initiating biometric authentication includes obtaining (e.g., capturing with the one or more biometric sensors 2603) data corresponding to at least a portion of the biometric feature and processing the biometric data to determine whether the biometric feature (or a portion thereof) satisfies biometric authentication criteria (e.g., determine whether the biometric data matches, within a threshold, a biometric template). While processing the biometric data, the electronic device displays (e.g., replaces display of the locked state indicator 2624 with) biometric progress indicator 2625, indicating that the electronic device 2600 is processing biometric data. If the electronic device 2600 determines that biometric authentication is successful, the electronic device indicates the success, as described with respect to FIGS 26N-P.

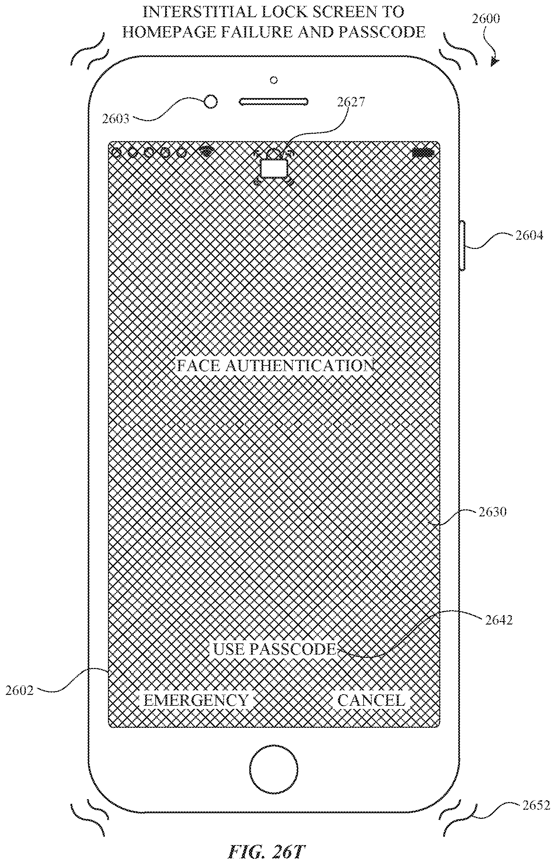

In FIG. 26T, the electronic device 2600 determines that biometric authentication (e.g., as described with reference to FIG. 26S) was unsuccessful, and in response, alternates a position of the locked state indicator to simulate a "shake" effect, outputs a tactile output 2652, and displays an alternative authentication affordance 2642.

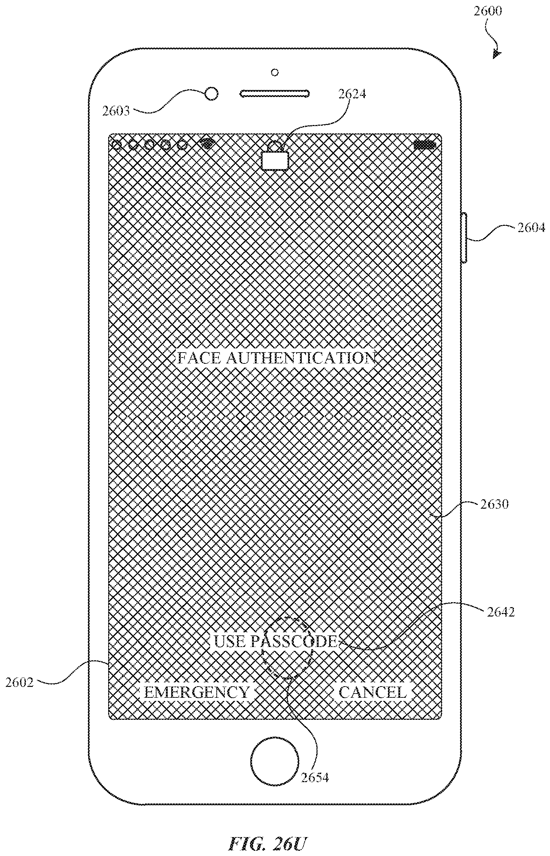

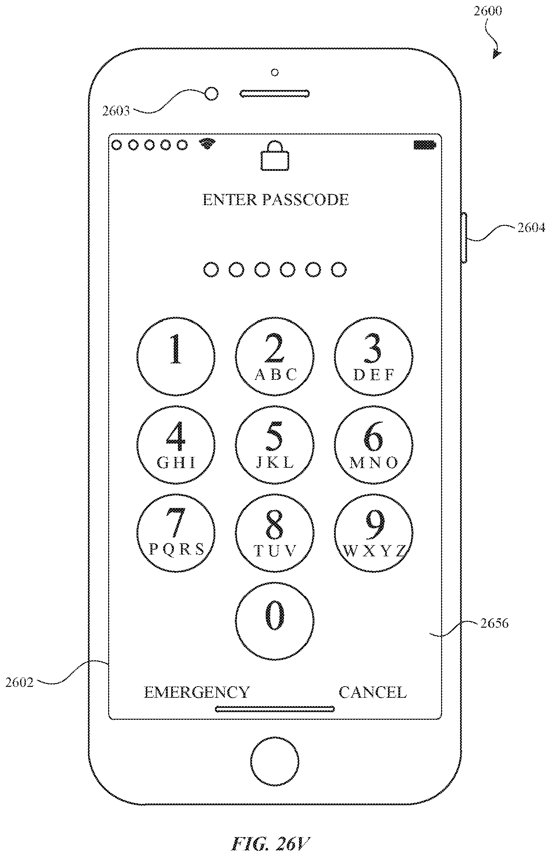

In FIG. 26U, the electronic device detects an activation of the alternative authentication affordance 2642. In some examples, the activation of the alternative authentication affordance is a tap gesture 2654 on the alternative authentication affordance 2642. With reference to FIG. 26V, in response to activation of the alternative authentication affordance 2642, the electronic device displays (e.g., replaces display of the interstitial interface 2630 with) alternative authentication interface 2656, with which a user authenticates with the electronic device upon entry of a valid passcode (or password).

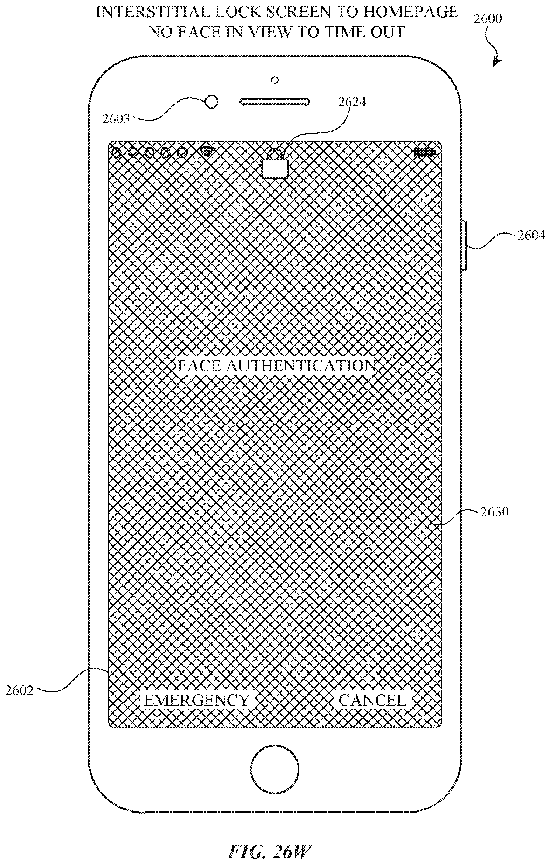

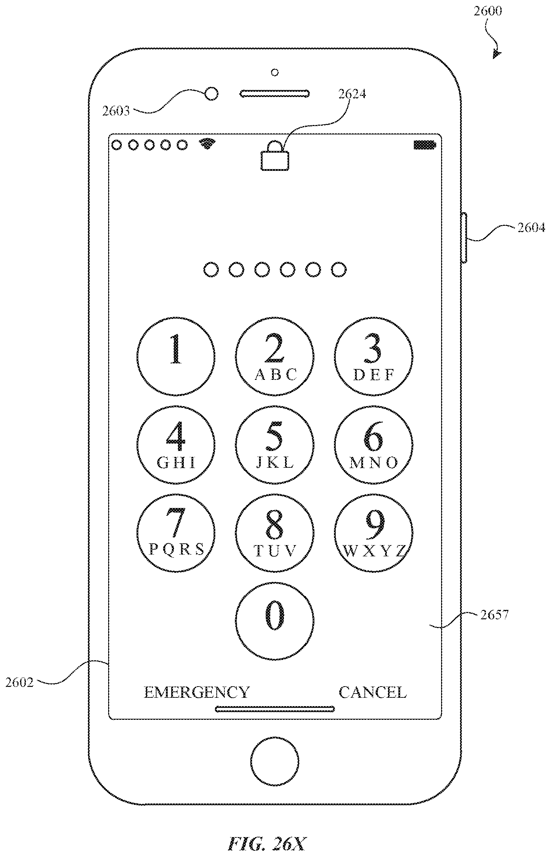

With reference to FIGS 26W-Y, in some examples, the electronic device fails to detect a biometric feature for a predetermined amount of time, the electronic device displays one or more interfaces and/or enters a low power state. In FIG. 26W, the electronic device displays interstitial interface 2630 (recall that the electronic device displays interstitial interface 2630 in response to a request for secured content received prior to completion of biometric authentication). If, for a predetermined amount of time, the electronic device 2600 does not detect a biometric feature, the electronic device displays (e.g., replaces display of the interstitial interface 2630 with) alternative authentication interface 2657. In some examples, the alternative authentication interface 2657 includes an indicator instructing the user to provide alternative authentication, such as a passcode. In other examples, as shown in FIG. 26X, the alternative authentication interface 2657 does not include an indicator instructing the user to provide the alternative authentication.

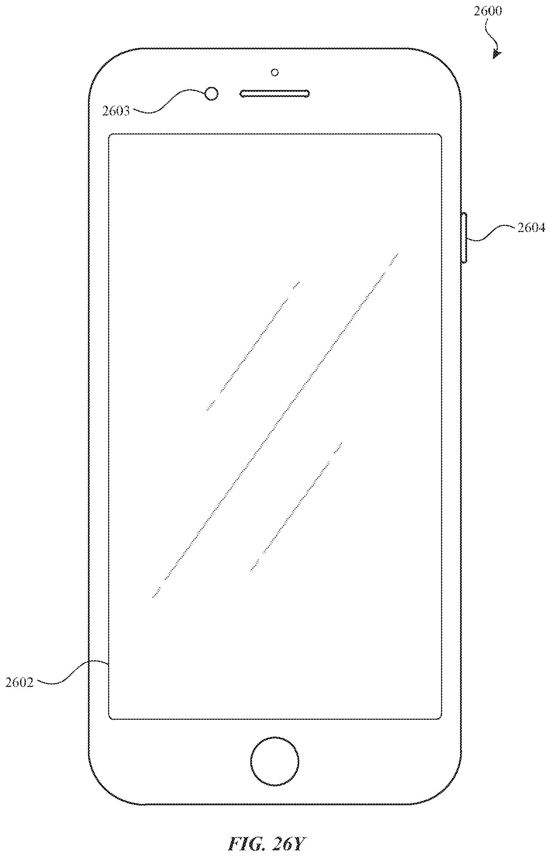

If during display of the alternative authentication interface 2657, a biometric feature is not detected for a predetermined amount of time, and no alternative authentication is provided, the electronic device 2600 transitions to a low-power state (e.g., display-disabled state), as shown in FIG. 26Y.

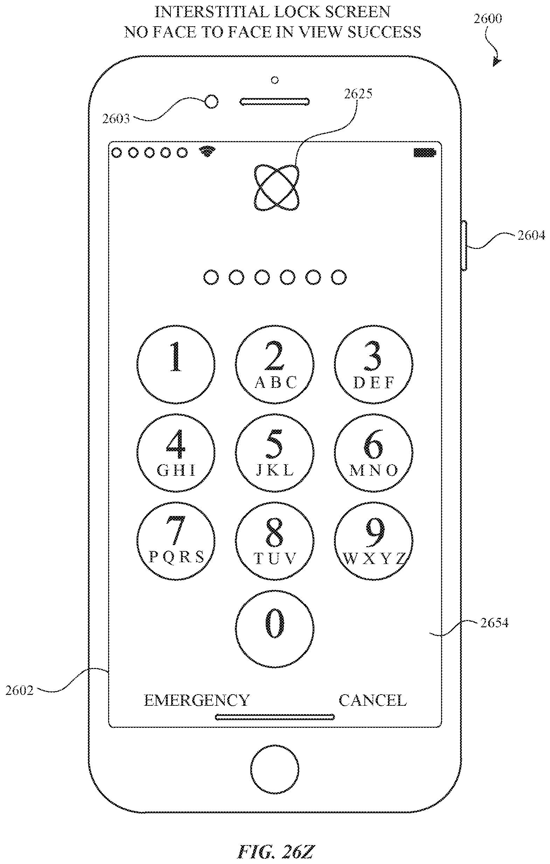

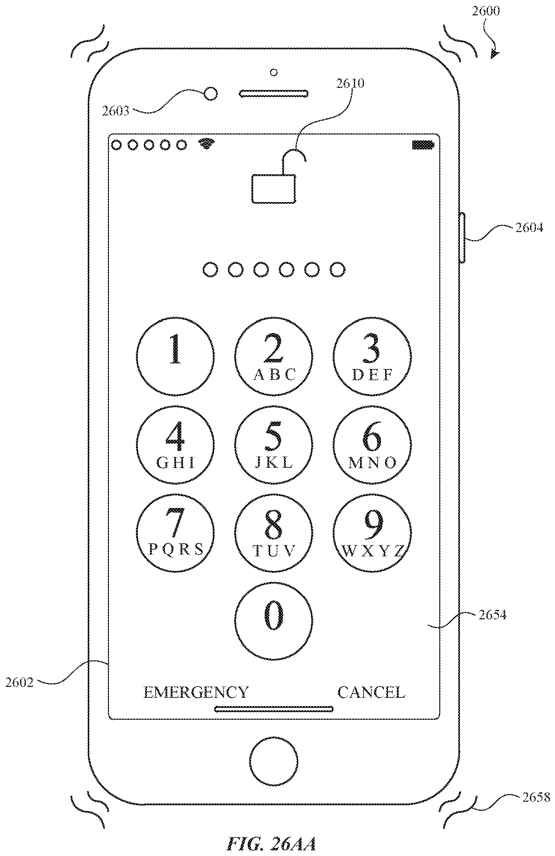

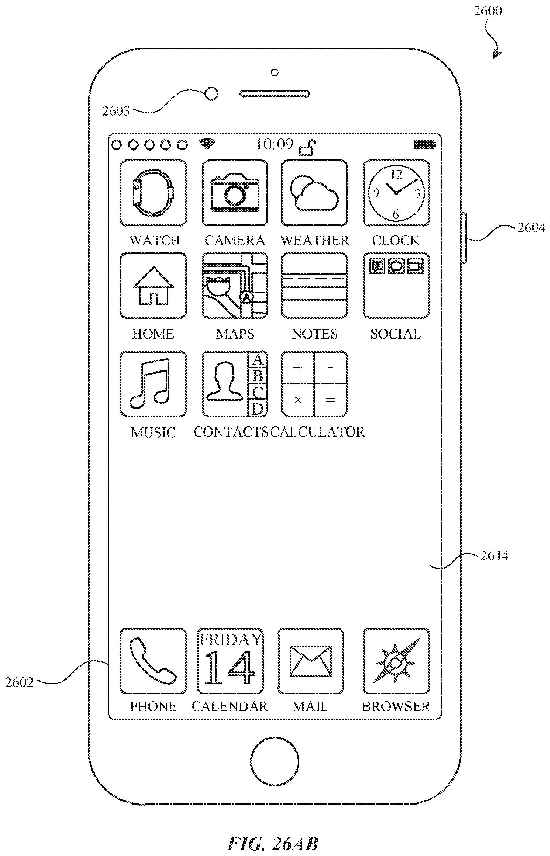

If, during display of the alternative authentication interface 2657, a biometric feature is detected, the electronic device 2600 performs biometric authentication, as described. As shown in FIG. 26Z, the electronic device displays (e.g., replaces display of the locked state indicator 2624 with) biometric progress indicator 2625 to indicate the electronic device is processing biometric data. In FIG. 26AA, the electronic device 2600 determines that biometric authentication is successful. In response, the electronic device displays (replaces display of biometric progress indicator 2625 with) unlocked state indicator 2610 and, optionally, outputs a tactile output 2658 to indicate that the biometric authentication is successful. In some examples, the electronic device 2600 subsequently displays a home screen interface 2614, as shown in FIG. 26AB.

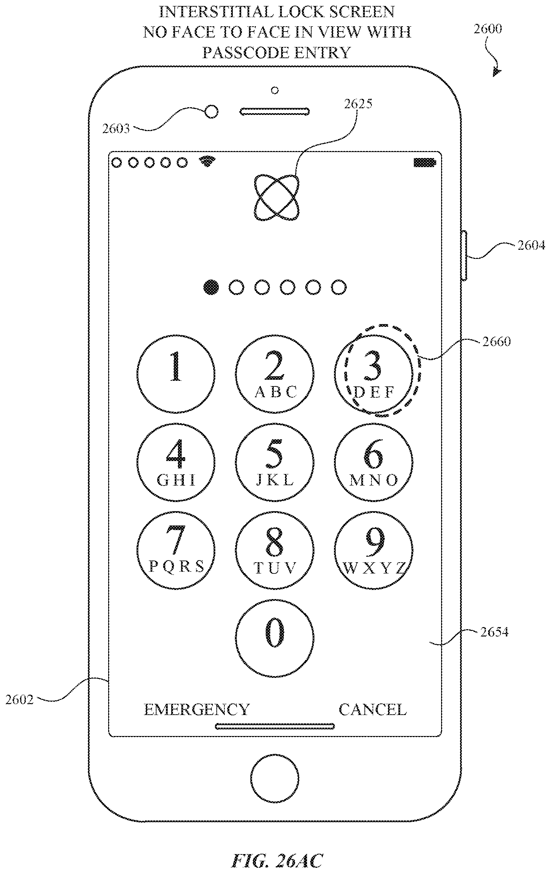

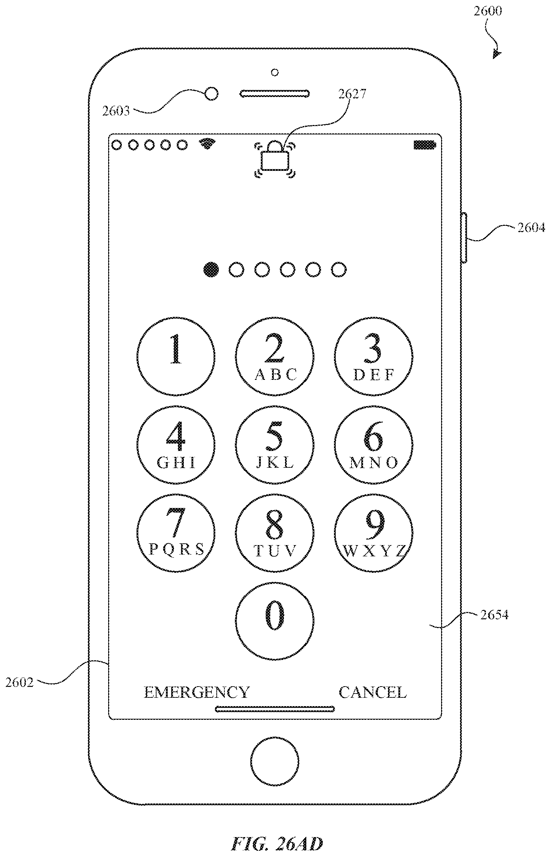

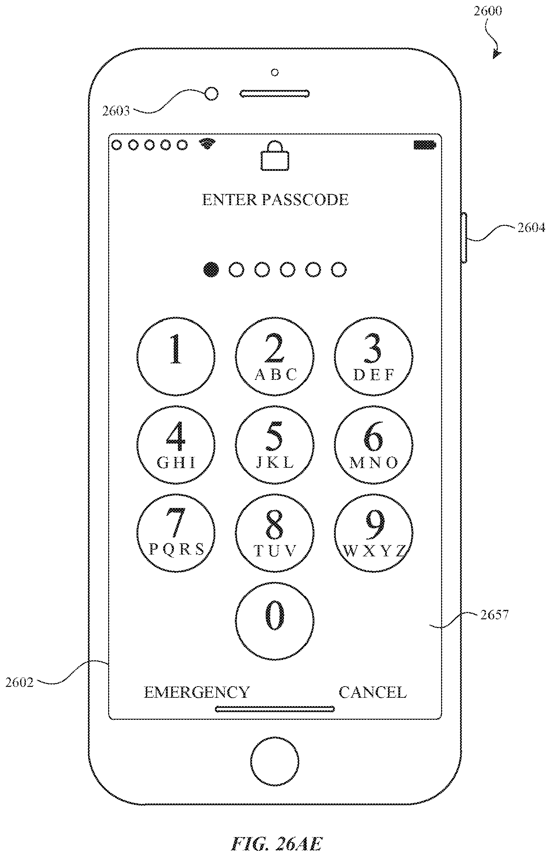

With reference to FIGS 26AC-AE, if during display of the alternative authentication interface 2657, biometric authentication fails, and at least a portion of an alternative authentication is provided, the electronic device 2600 indicates that the biometric authentication is unsuccessful without providing a tactile output. As shown in FIG. 26AC, the electronic device, while performing biometric authentication (as indicated by biometric progress indicator 2625), receives a portion of an alternative authentication (e.g., passcode) by way of user input (e.g., tap gesture) 2660. In FIG. 26AD, the electronic device determines that the biometric authentication was unsuccessful, and in response, displays the locked state indicator 2627 and further alternates a position of the locked state indicator to simulate a "shake" effect. In some examples, the electronic device 2600 does not output a tactile output, and further maintains display of the alternative authentication interface 2657, as shown in FIG. 26AE.

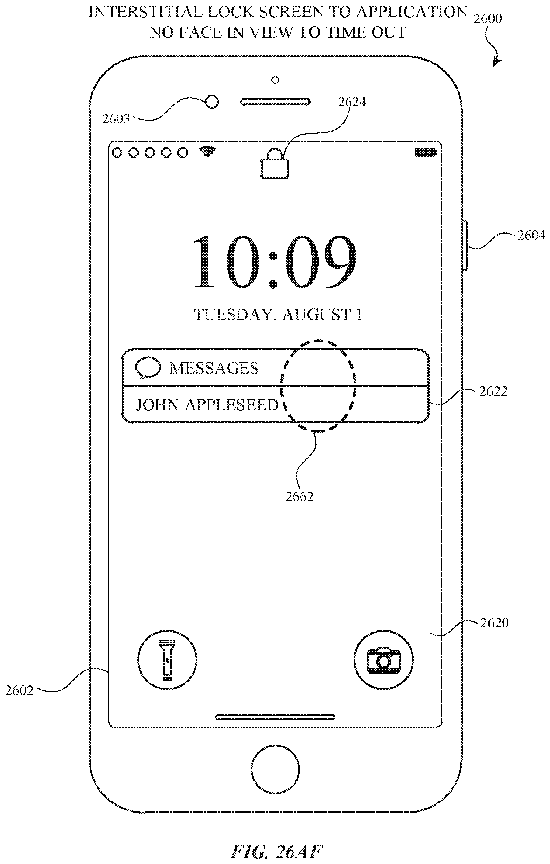

In FIG. 26AF, the electronic device 2600, while in a locked state, displays locked interface 2620. As described, the locked interface 2620 includes a notification affordance 2622 and a locked state indicator 2624. In some examples, the electronic device receives a request for secured content on the electronic device (e.g., a message associated with notification affordance 2622). The electronic device 2600, for instance, detects activation of the notification affordance 2622. In some examples, the activation of the notification affordance 2622 is a tap gesture 2662.

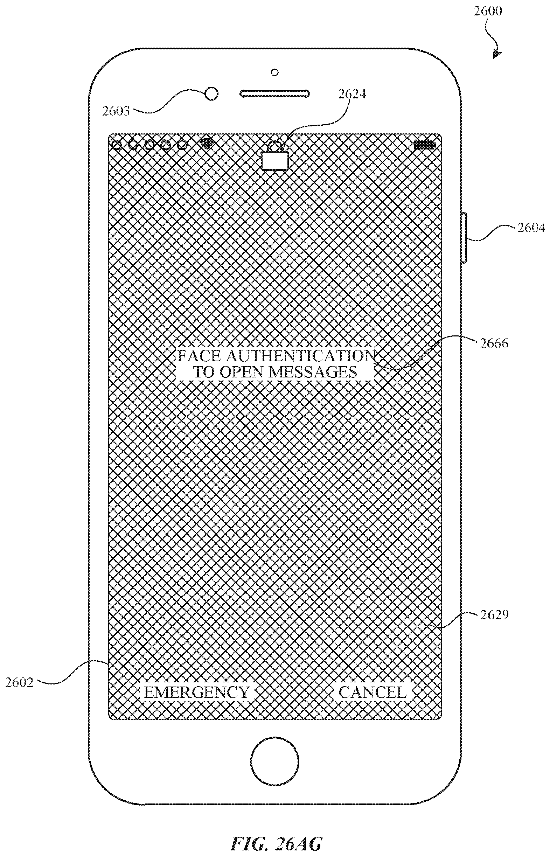

In some examples, the activation of the notification affordance 2622 is received prior to completion of biometric authentication. Accordingly, as shown in FIG. 26AG, in response to the activation of the notification affordance 2622, the electronic device 2600 displays interstitial interface 2629 including a biometric indicator 2666. The biometric indicator 2666 identifies secured content associated with the received request for secured content in some examples.

As shown in FIG. AH, if, while displaying the interstitial interface 2629, the electronic device 2600 does not detect a biometric feature, the electronic device displays an alternative authentication affordance 2668. In some examples, activation of the alternative authentication affordance 2668 causes the electronic device to display an alternative authentication interface (e.g., alternative authentication interface 2657 of FIG. 26X).

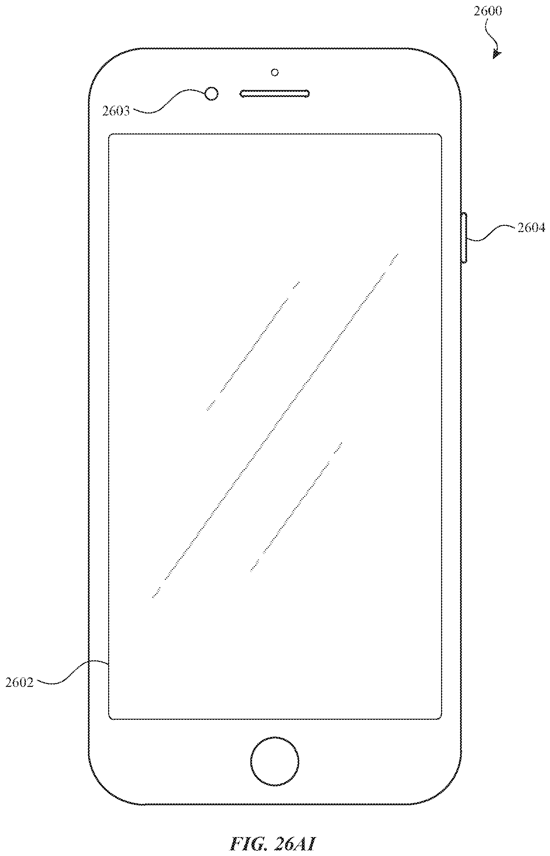

If during display of the alternative authentication interface, a biometric feature is not detected for a predetermined amount of time, and no alternative authentication is provided, the electronic device 2600 transitions to a low-power state (e.g., display-disabled state), as shown in FIG. 26AI.

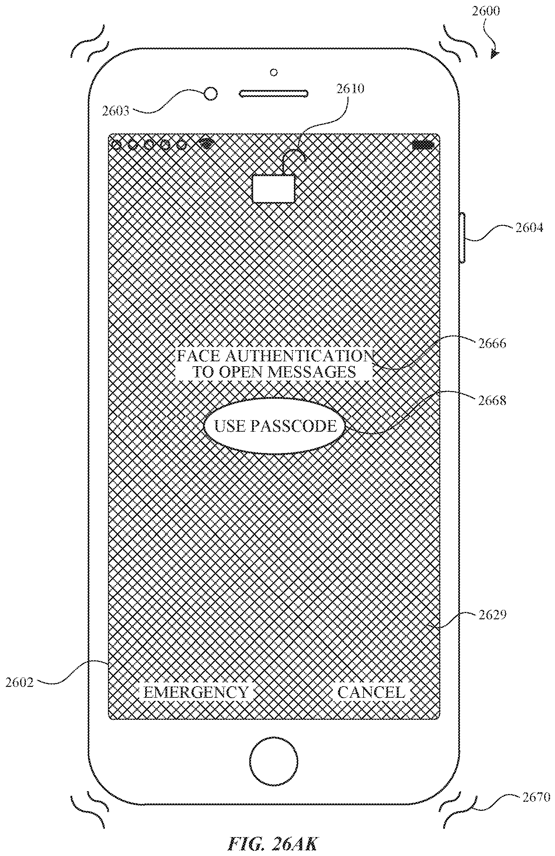

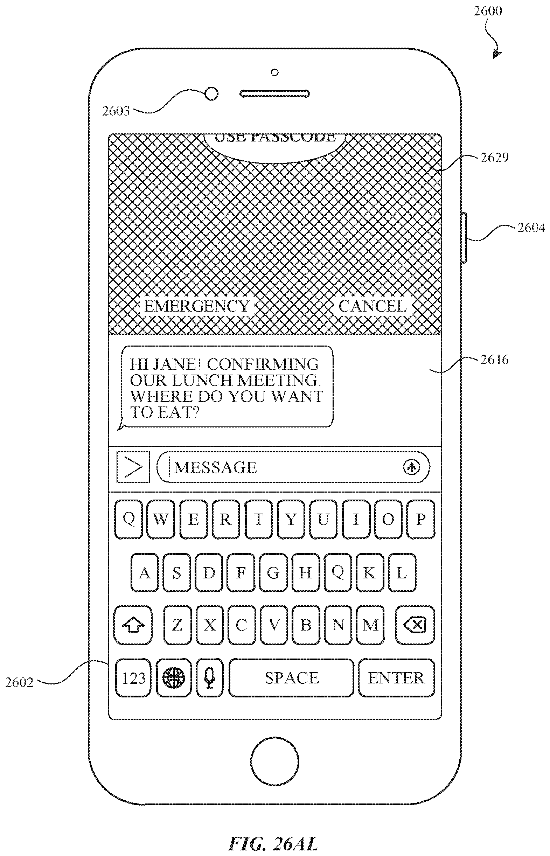

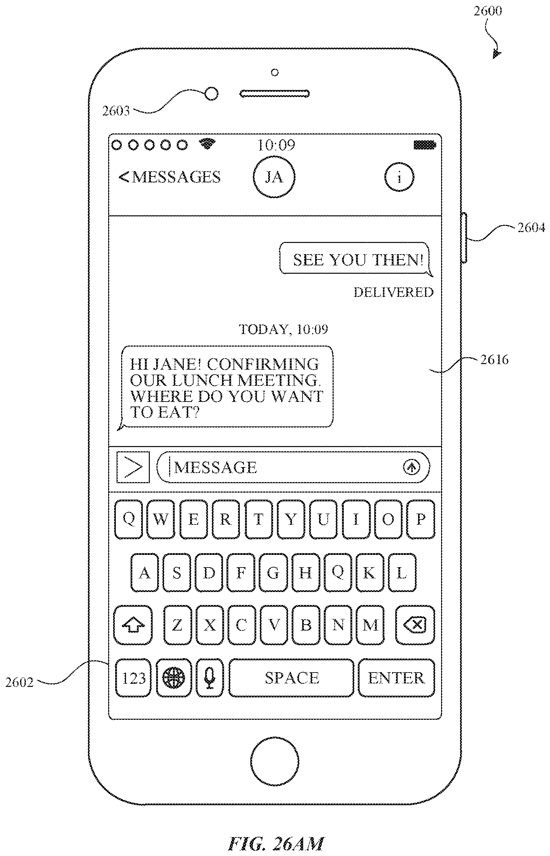

As described with respect to FIG. AH, the electronic device displays alternative authentication affordance 2668 if no biometric feature is detected. In some examples, a biometric feature is detected after display of alternative authentication affordance 2668, and in response, the electronic device performs biometric authentication, as described above. As shown in FIG. AJ, to indicate that biometric data is being processed, the electronic device 2600 displays biometric progress indicator 2625. In FIG. 26AK, the electronic device 2600 determines that biometric authentication is successful. In response, the electronic device 2600 display unlocked state indicator 2610, and, optionally, provides tactile output 2670 to indicate that the biometric authentication was successful. In some examples, the electronic device 2600 subsequently displays a messaging application interface 2616, as shown in FIG. 26AM. With reference to FIGS. 26AL-AM, some examples, displaying the messaging application interface 2616 includes sliding the interstitial interface 2629 in an upward direction to display (e.g., reveal) messaging application interface 2616, as analogously described with reference to FIGS. 19P-R.

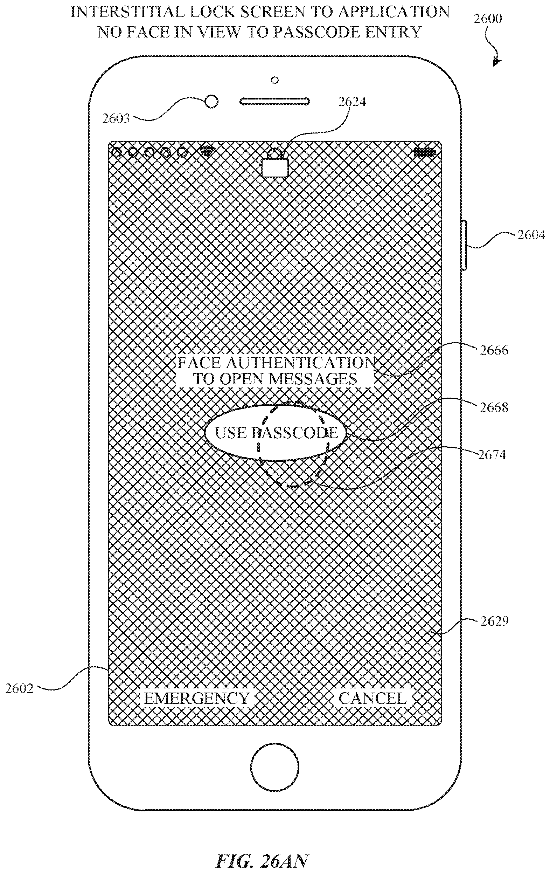

In FIG. 26AN, the electronic device 2600 displays the interstitial interface 2629 having the alternative authentication affordance 2668. While displaying the interstitial interface 2629, the electronic device detects activation of the alternative authentication affordance 2668. In some examples, the activation of the alternative authentication affordance 2668 is a tap gesture 2674 on the alternative authentication affordance 2668.

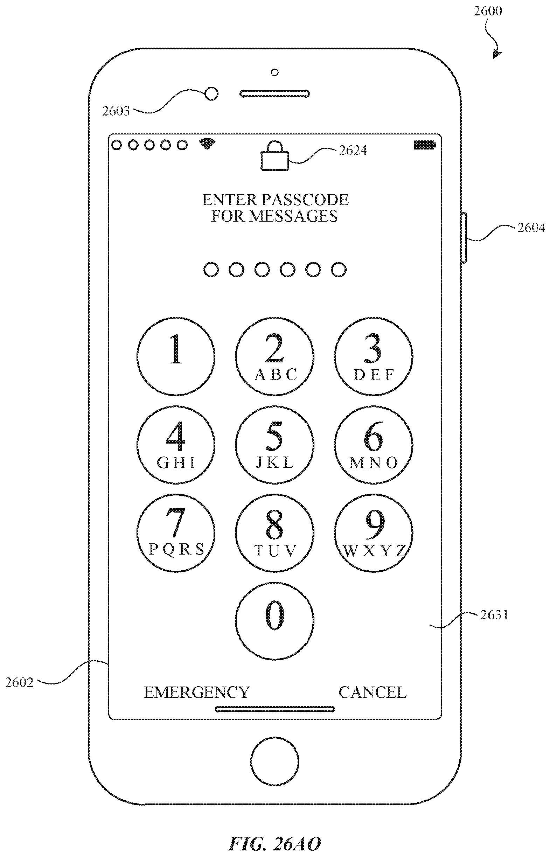

With reference to FIG. 26AO, in response to activation of the alternative authentication affordance 2668, the electronic device 2600 displays alternative authentication interface 2631. In some examples, the alternative authentication interface 2631 identifies requested secured content ("Enter passcode for messages").

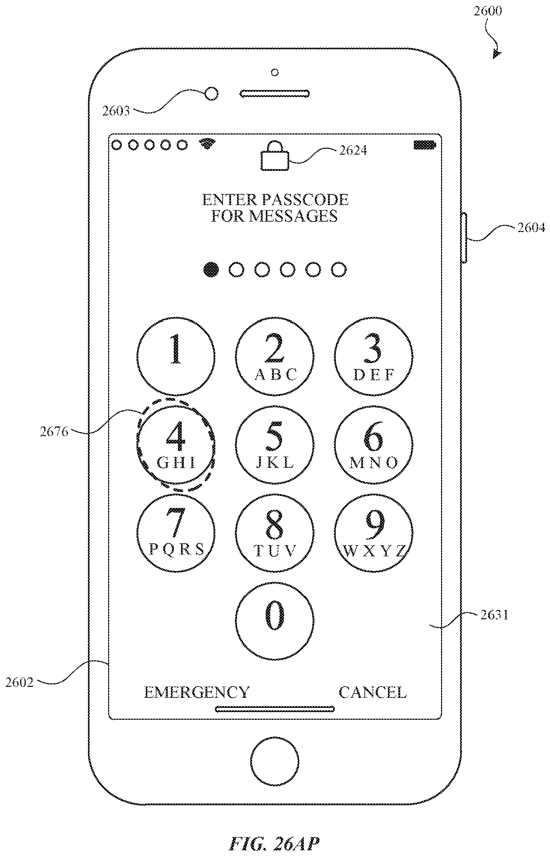

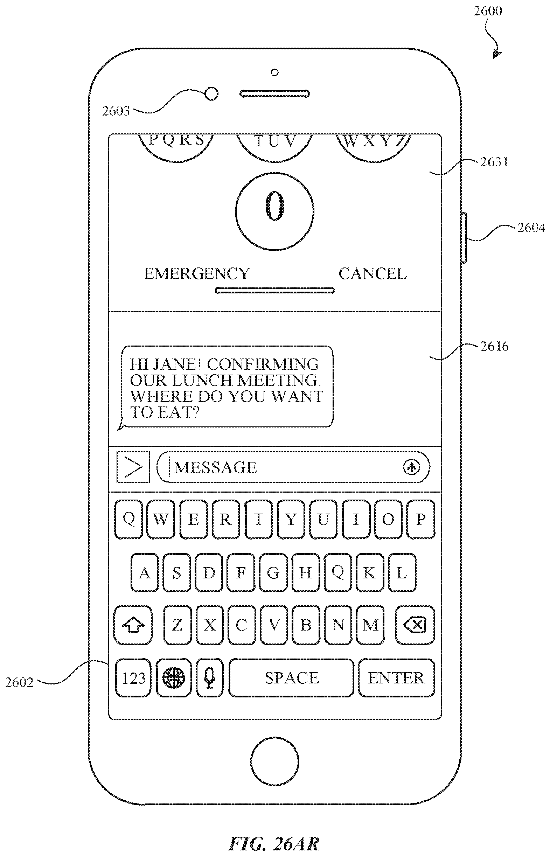

With reference to FIGS. 26AP-AQ, a valid passcode (or password) is received by the electronic device 2600, at least in part, in response to the tap gesture 2076 (FIG. 26AP), and optionally, one or more other inputs indicating additional alphanumeric digits of the valid passcode. As shown in FIGS. 26AR-AS, once a valid passcode has been received, the electronic device is unlocked and displays (e.g., replaces display of the alternative authentication interface 2631 with) the messaging application interface 2616. In some examples, displaying the messaging application interface 2616 includes sliding the alternative authentication interface 2631 in an upward direction to display (e.g., reveal) the messaging application interface 2616, as analogously described with reference to FIGS. 19P-R.

FIGS. 27A-27E are a flow diagram illustrating a method for performing biometric authentication using an electronic device in accordance with some embodiments. Method 2700 is performed at a device (e.g., 100, 300, 500, 2600) with a display, one or more input devices (e.g., a touchscreen, a mic, a camera), and a wireless communication radio (e.g., a Bluetooth connection, WiFi connection, a mobile broadband connection such as a 4G LTE connection). In some embodiments, the display is a touch-sensitive display. In some embodiments, the display is not a touch sensitive display. In some embodiments, the electronic device includes a plurality of cameras. In some embodiments, the electronic device includes only one camera. In some examples, the device includes one or more biometric sensors which, optionally, include a camera, such as a infrared camera, a thermographic camera, or a combination thereof. In some examples, the device further includes a light-emitting device, such as an IR flood light a structured light projector, or a combination thereof. The light-emitting device is, optionally, used to illuminate the biometric feature (e.g., the face) during capture of biometric data of the biometric feature by the one or more biometric sensors. Some operations in method 2700 are, optionally, combined, the orders of some operations are, optionally, changed, and some operations are, optionally, omitted.

As described below, method 2700 provides an intuitive way for performing biometric authentication. The method reduces the cognitive burden on a user for authentication of biometric features, thereby creating a more efficient human-machine interface and intuitive user experience. For battery-operated computing devices, enabling a user to performing authentication of biometric features faster and more efficiently conserves power and increases the time between battery charges.

In some examples, while the electronic device (e.g., 2700) is in a locked state in which the device is not authorized to perform a respective operation, the electronic device displays a first graphical indication (e.g., 2624) (e.g., a closed lock icon) that indicates that the device is in the locked state. Displaying a first graphical indication that indicates that the device is in the locked state provides the user with a readily available indication as to the state of the device. In turn, the user is informed as to what functions of the device are enabled and/or available, thereby making the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, while the device is in an unlocked state in which the device is authorized to perform the respective operation, displaying a second graphical indication (e.g., 2610) (e.g., an open lock icon) that indicates that the device is in the unlocked state in place of the first graphical indication. Displaying a second graphical indication that indicates that the device is in the unlocked state provides the user with a readily available indication as to the state of the device. In turn, the user is informed as to what functions of the device are enabled and/or available, thereby making the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, the first graphical indication and the second graphical indication are displayed at a respective location (e.g., substantially near the top-center of the display 2602) in a user interface (e.g., 2606, 2620).

In some examples, the electronic device detects (2702) a request to perform a respective operation that requires authentication. In some examples, the request to perform a respective operation that requires authentication is a request (e.g., 2612) to display a home screen (e.g., 2614) with a plurality of application open icons that, when selected, open corresponding applications, or a request to display an application user interface corresponding to a selected notification. In some examples, the request to perform a respective operation includes a home input (e.g., 2612). In some examples, the home input is a selection of a home button or a home gesture, such as an upward swipe from a respective edge of the display, such as a bottom of the display. In some examples, the request to perform a respective operation includes selection (e.g., 2615) of a notification (e.g., 2608). In some examples, the selection of a notification is a tap, long press, hard press, or swipe on a notification user interface object. In some examples, the respective operation includes displaying a home screen that includes a plurality of application icons for opening different applications. In some examples, the plurality of application icons for opening different applications are application icons that, when selected cause a corresponding application to be opened. In some examples, the home screen also includes one or more widgets, system status indicators, device controls, etc. In some examples, the respective operation includes displaying an application user interface (e.g., 2616) for an application that corresponds to the notification. In some examples, the application interface includes information specifically related to the notification (e.g., the notification is a notification of an electronic communication and the application user interface includes a representation of the electronic communication or the notification).

In response to detecting the request to perform the respective operation that requires authentication (2704), in accordance with a determination that the device is unlocked, the electronic device performs (2706) the respective operation. Further, in accordance with a determination that the device is locked and a first form of authentication is available for use (2708), the electronic device displays (2712), on the display (e.g., 2602), an authentication indicator (e.g., 2625) for the first form of authentication without displaying one or more affordances (e.g., 2636, 2638) for using a second form of authentication. Displaying the authentication indicator without displaying affordances for using a second form of authentication provides the user with an intuitive interface in which the device forgoes providing additional options while biometric authentication is performed. Providing an intuitive interface in this manner enhances the operability of the device (e.g., avoids a user attempting alternative authentication prior to completion of biometric authentication) and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, the authentication indicator is a visual indication that the first form of authentication is being attempted by the device, such as text or graphical elements describing the first form of authentication (e.g., password, passcode, fingerprint, or other form of authentication). In some examples, the first form of authentication is a form of biometric authentication based on data obtained by the one or more biometric sensors (2710) (e.g., a contactless form of biometric authentication such as face recognition or iris recognition). In some examples, the authentication indicator includes information indicating that the device is attempting to use first form of authentication (2714). In some examples, the authentication indicator includes a graphic or text description indicating that face biometric authentication is available such as "Face ID" or "Face ID to open Messages"). In some examples, the authentication indicator is displayed along with an option to cancel authentication. In some examples, the authentication indicator is displayed along with an option to display emergency information (e.g., an emergency call user interface and/or emergency medical information) without unlocking the device. In some examples, the authentication indicator includes information of progress of an attempt at the first form of authentication (2716), such as a progress indicator.

In some examples, while displaying the authentication indicator for the first form of authentication without displaying affordances for using the second form of authentication, the electronic device processes (2718) respective data from the one or more biometric sensors (e.g., 2603). In some examples, at least a portion of the respective data from the one or more biometric sensors, that is processed while displaying the biometric authentication indicator for the first form of biometric authentication without displaying one or more affordances for using the second form of authentication, was obtained by the one or more biometric sensors prior to displaying the authentication indicator for the first form of authentication (2720). In some examples, at least a portion of the respective data from the one or more biometric sensors, that is processed while displaying the biometric authentication indicator for the first form of biometric authentication without displaying one or more affordances for using the second form of authentication, was obtained by the one or more biometric sensors after displaying the authentication indicator for the first form of authentication (2722).

In some examples, after processing the respective data from the one or more biometric sensors (2724), in accordance with a determination that the respective data from the one or more biometric sensors is consistent with biometric information that is authorized to perform the respective operation (e.g., the device detects an authorized face in the respective biometric data), the electronic device performs (2726) the respective operation. Performing the respective operation in response to determining that the respective data from the one or more biometric sensors is consistent with biometric information that is authorized to perform the respective operation enhances the operability of the device by, in some examples, allowing a user to authenticate with a device without having to manually authenticate, thereby making the user-device interface more efficient.

In some examples, further after processing the respective data from the one or more biometric sensors, in accordance with a determination that the respective data is not consistent with biometric information that is authorized to perform the respective operation (2728) (e.g., the device detects no face or detects a face that is not consistent with authorized faces), the electronic device displays (2730) one or more affordances (e.g., 2636, 2638) for using the second form of authentication that were not displayed prior to processing the respective data from the one or more biometric sensors. Displaying the one or more affordances for using the second form of authentication that were not displayed prior to processing the respective data from the one or more biometric sensors provides the user with a quick alternative method to access operations (e.g., locked operations) of the device that require successful authentication when the biometric data is unsuccessful. Providing additional control options with additional displayed controls enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, the one or more affordances includes displaying a "use passcode" button, a "use password" button, or a keypad/keyboard for entering a passcode/password. In some examples, the one or more affordances for using the second form of authentication are displayed after a respective delay during which the authentication indicator for the first form of authentication is displayed without displaying one or more affordances for using a second form of authentication.

In some examples, displaying the one or more affordances includes: in accordance with a determination that a biometric feature that corresponds to the first form of authentication is detected by the one or more biometric sensors, displaying the one or more affordances for using the second form of authentication after a first time period has elapsed (e.g., since the authentication indicator was displayed); and in accordance with a determination that no biometric feature that corresponds to the first form of authentication is detected by the one or more biometric sensors, displaying the one or more affordances for using the second form of authentication after a second time period has elapsed (e.g., since the authentication indicator was displayed). In some examples, the second time period is different from (e.g., longer than or shorter than) the first time period.

In some examples, displaying the one or more affordances includes: in accordance with a determination that a biometric feature that can be used in the first form of authentication but that is not consistent with authorized biometric features has been detected, displaying the user interface (e.g., 2656) for the second form of authentication (e.g., displaying a plurality of character entry keys (e.g., a keyboard or keypad) for entering a sequence of characters for authentication (e.g., a password or passcode)) concurrently with respective instructions to provide one or more inputs to authenticate with the second form of authentication (e.g., displaying the instructions to use the one or more character entry keys to enter the sequence of characters for authentication (e.g., the passcode keypad is displayed with "enter passcode to unlock" instructions)); and in accordance with a determination that no biometric feature that corresponds to the first form of authentication has been detected by the one or more biometric sensors, displaying the user interface (e.g., 2657) for the second form of authentication (e.g., displaying a plurality of character entry keys (e.g., a keyboard or keypad) for entering a sequence of characters for authentication (e.g., a password or passcode)) without displaying the respective instructions to provide one or more inputs to authenticate with the second form of authentication. In some examples, the user interface for the second form of authentication is displayed without displaying the respective instructions to use the one or more character entry keys to enter the sequence of characters for authentication (e.g., the passcode keypad is displayed without "enter passcode to unlock" instructions)). In some examples, the plurality of character entry keys are initially displayed without the respective instructions to use the one or more character entry keys to enter the sequence of characters for authentication (e.g., while the device is attempting to use the first form of authentication) and then, when using the first form of authentication fails, the device displays explicit instructions to use the one or more character entry keys to enter the sequence of characters for authentication.

In some examples, displaying the one or more affordances includes: in accordance with a determination that the request to perform the respective operation includes a home input, displaying a plurality of character entry keys (e.g., a keyboard or keypad) for entering a sequence of characters for authentication (e.g., a password or passcode); and in accordance with a determination that the request to perform the respective operation includes selection of a notification, displaying a passcode affordance that, when activated causes display of a plurality of character entry keys (e.g., a keyboard or keypad) for entering a sequence of characters for authentication (e.g., a password or passcode). In some examples, the passcode affordance is restricted from activation in response to tap inputs and is responsive to one or more other types of inputs that include additional input requirements beyond a touch input. In some examples, the one or more additional input requirements include a requirement that the input is a hard press input (e.g., a requirement that the input reach a characteristic intensity that is above a respective intensity threshold), a requirement that the input is a long press input (e.g., a requirement that the input include a contact that is maintained on the touch-sensitive surface for more than a predetermined amount of time without moving more than a predetermined distance), and/or a requirement that the input is a swipe input (e.g., a requirement that the input include movement of a contact by more than a threshold amount of movement in a respective direction). Restricting activation in response to tap inputs in this manner avoids spurious (e.g., accidental and/or unintentional) activations of the passcode affordance, providing improved control and usability of the electronic device, thereby reducing user mistakes when operating/interacting with the device) which, additionally, reduces power usage and improves battery life of the device by enabling the user to use the device more quickly and efficiently.

In some examples, after displaying one or more affordances for using the second form of authentication that were not displayed prior to processing the respective data from the one or more biometric sensors: in accordance with a determination that the request to perform the respective operation includes a home input, the electronic device waits for additional input for a first delay time period before (automatically, without further user input) ceasing to display the one or more affordances for using the second form of authentication (e.g., turning off the display); and in accordance with a determination that the request to perform the respective operation includes selection of a notification, the electronic device waits for additional input for a second delay time period before (automatically, without further user input) ceasing to display the one or more affordances for using the second form of authentication (e.g., turning off the display). In some examples, the second delay time period is different from (e.g., shorter than or longer than) the first delay time period.

In some examples, while the device is locked and a first form of authentication is available for use, the electronic device attempts (2732) biometric authentication using the first form of authentication. In some examples, the device is locked and/or a first form of authentication is available for use in response to the request to perform the respective operation, in response to an attempt to use the second form of authentication, or in response to an input requesting authentication such as lifting the device, pressing a button (e.g., 2604) on the device, tapping a lock icon on the device, or tapping a touch-sensitive display of the device). In some examples, while attempting the biometric authentication using the first form of authentication, the electronic device displays (2734) a progress indicator (e.g., as depicted by progress indicators 2624 and/or 2625) that changes appearance to indicate progress toward biometric authentication using the first form of authentication. In some examples, the electronic progress indicator is a progress bar or an icon that changes from a "face detection" icon or an animation to a "face analysis" icon or animation. In some examples, while attempting the biometric authentication using the first form of authentication, the device replaces the first graphical indication with a progress indicator. In some examples, after completing an attempt at the first form of authentication, in accordance with a determination that the authentication was unsuccessful, the electronic device replaces the progress indicator with the first graphical indication (e.g., the closed lock icon); and in accordance with a determination that the authentication was successful, the electronic device replaces the progress indicator with the second graphical indication (e.g., the open lock icon).

In some examples, after attempting the biometric authentication using the first form of authentication (2736), in accordance with a determination that the biometric authentication with the first form of authentication is successful, the electronic device updates (2738) the progress indicator in a first manner (e.g., displaying a check mark or an open lock icon) to indicate the successful authentication with the first form of authentication (and, optionally, performing the respective operation); and/or generates a second tactile output (e.g., that is different from the first tactile output that indicates authentication failure) that indicates an authentication success (e.g., a single tap).

In some examples, after attempting the biometric authentication using the first form of authentication, in accordance with a determination that the biometric authentication with the first form of authentication detects a biometric feature that can be used in the first form of authentication but that is not consistent with authorized biometric features, the electronic device updates (2740) the progress indicator in a second manner (e.g., shaking a lock icon or face icon side to side to indicate that authentication failed) to indicate unsuccessful authentication. In some examples, the second manner of updating the progress indicator is different from the first manner of updating the progress indicator (2742). In some examples, the electronic device generates a first tactile output that indicates an authentication failure (e.g., a triple tap).

In some examples, after attempting the biometric authentication using the first form of authentication, in accordance with a determination that the biometric authentication with the first form of authentication does not detect a biometric feature that can be used in the first form of authentication, the electronic device updates (2744) the progress indicator in a third manner (e.g., displaying a closed lock icon without shaking the lock icon side to side to indicate that authentication failed) that is different from the first manner and the second manner.

In some examples, after attempting the biometric authentication using the first form of authentication, in accordance with a determination that the biometric authentication with the first form of authentication does not detect a biometric feature that can be used in the first form of authentication, the electronic device displays a graphical indication that a successful authentication has not occurred without generating a tactile output. In some examples, the device does not generate the first tactile output or another tactile output that indicates an authentication failure, because the device did not recognize any biometric feature that could be used for the first form of authentication).

In some examples, after attempting the biometric authentication using the first form of authentication for a first time: the electronic device displays a user interface (e.g., 2654) for the second form of authentication that includes a plurality of character entry keys (e.g., a keyboard or keypad) for entering a sequence of characters for authentication (e.g., a password or passcode). Further, the electronic device, while displaying the user interface for the second form of authentication, attempts the biometric authentication using the first form of authentication for a second time. Further, in accordance with a determination that the biometric authentication with the first form of authentication is successful, the electronic device performs the respective operation (and, optionally, updates the progress indicator in a first manner (e.g., displaying a check mark or an open lock icon (e.g., 2610)) to indicate the successful authentication with the first form of authentication). Further, in accordance with a determination that the biometric authentication with the first form of authentication detects a biometric feature that can be used in the first form of authentication but that is not consistent with authorized biometric features before receiving input entering less than a threshold number of characters (e.g., less than 1, 2, 3, 4, or 5 characters) via one or more of the plurality of character entry keys, the electronic device forgoes performing the respective operation and generates a first tactile output that indicates an authentication failure (e.g., a triple tap) (and, optionally, displays a graphical indication that a successful authentication has not occurred). Further, in accordance with a determination that the biometric authentication with the first form of authentication detects a biometric feature that can be used in the first form of authentication but that is not consistent with authorized biometric features after receiving input entering at least the threshold number of characters (e.g., less than 1, 2, 3, 4, or 5 characters) via one or more of the plurality of character entry keys, the electronic device performs the respective operation and displays a graphical indication that a successful authentication has not occurred without generating a tactile output (e.g., a closed lock icon).

In some examples, in response to detecting the request to perform the respective operation that requires authentication: in accordance with a determination that the device is locked and the first form of biometric authentication is not available for use (e.g., when the request to perform the respective operation is received), the electronic device displays (2746) one or more affordances for using the second form of authentication (e.g., a passcode or password entry user interface or a prompt to use a second form of biometric authentication such as a fingerprint authentication). In some examples, the first form of authentication is not available for use because it has been disabled (2748). In some examples, the first form of authentication is not available for use due to more than a threshold number of failed biometric authentication attempts with the first form of biometric authentication, due to a restart of the device, or due to a user request to disable the first form of biometric authentication. In some examples, the first form of authentication is disabled in response to user entry into an emergency option user interface without selecting an option that corresponds to a request to access additional information at the device (e.g., the user triggers display of the emergency option user interface by pressing two or more buttons concurrently for more than a threshold amount of time and then selects an option to shut down the device or cancel display of the emergency option user interface rather than selecting an option to display medical information or display an emergency dialing interface). In some embodiments, the first form of authentication is disabled in response to user selection of an option to disable the first form of biometric authentication (e.g., via a biometric authentication setting in a settings user interface). In some examples, the first form of authentication is not available for use because operation of the one or more biometric sensors is limited by current environmental and/or device conditions that reduce the ability of the one or more biometric sensors to operate within predefined parameters (2750). In some examples, the device is too hot, the device is too cold, there is too much light in an environment of the device, there is too little light in the environment of the device, and/or the battery of the device is not sufficiently charged to run the one or more biometric sensors.

In some examples, the electronic device detects a first input (e.g., 2650) (e.g., a tap input) at a location that corresponds to the respective location in the user interface. In some examples, in response to detecting the first input at the location that corresponds to the respective location in the user interface, in accordance with a determination that the device is in a locked state (e.g., the tap input was detected on the closed lock icon), the electronic device attempts the first form of authentication. Attempting the first form of authentication in response to detecting the first input at the location that corresponds to the respective location in the user interface and in accordance with a determination that the device is in a locked state provides an intuitive and convenient feature in which the first form of authentication is initiated, thereby making the user-device interface more efficient, which, additionally, reduces power usage and improves battery life of the device by enabling the user to use the device more quickly and efficiently.

In some examples, the electronic device detects a second input (e.g., a tap input) at a location that corresponds to the respective location in the user interface. In some examples, in response to detecting the second input at the location that corresponds to the respective location in the user interface, in accordance with a determination that the device is in an unlocked state (e.g., the tap input was detected on the open lock icon), the electronic device transitions the device from the unlocked state to the locked state. In some examples, the respective location is on a cover sheet user interface that is displayed when the device screen is initially turned on, and the second graphical indication (e.g., the open lock icon) is displayed when the cover sheet user interface is displayed on the device while the device is still in the unlocked state, while the first graphical indication (e.g., the lock icon) is displayed when the cover sheet user interface is displayed on the device while the device is in the locked state.

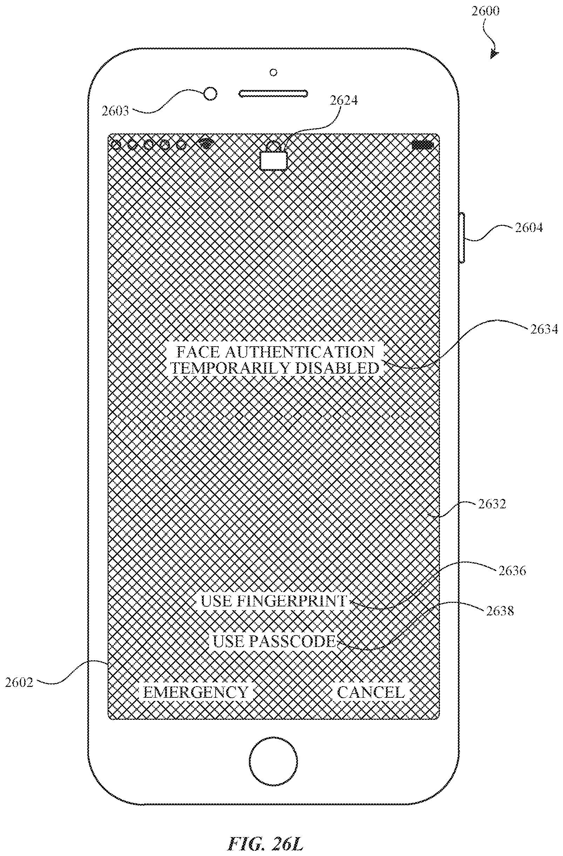

Note that details of the processes described above with respect to method 1200 (e.g., FIGS. 27A-27E) are also applicable in an analogous manner to the methods described herein. For example, method 2700 optionally includes one or more of the characteristics of the various methods described herein with reference to methods 800, 1000, 1200, 1400, 1600, 1800, 2000, 2200, and 2500. For example, the enrolled biometric data described in method 1200 can be used to perform biometric authentication as described with respect to FIGS. 26L-N. For another example, one or more interstitial interfaces as described in methods 2000 and 2700 optionally are displayed in response to receipt of an input prior to completion of a biometric authentication process. For brevity, these details are not repeated herein.

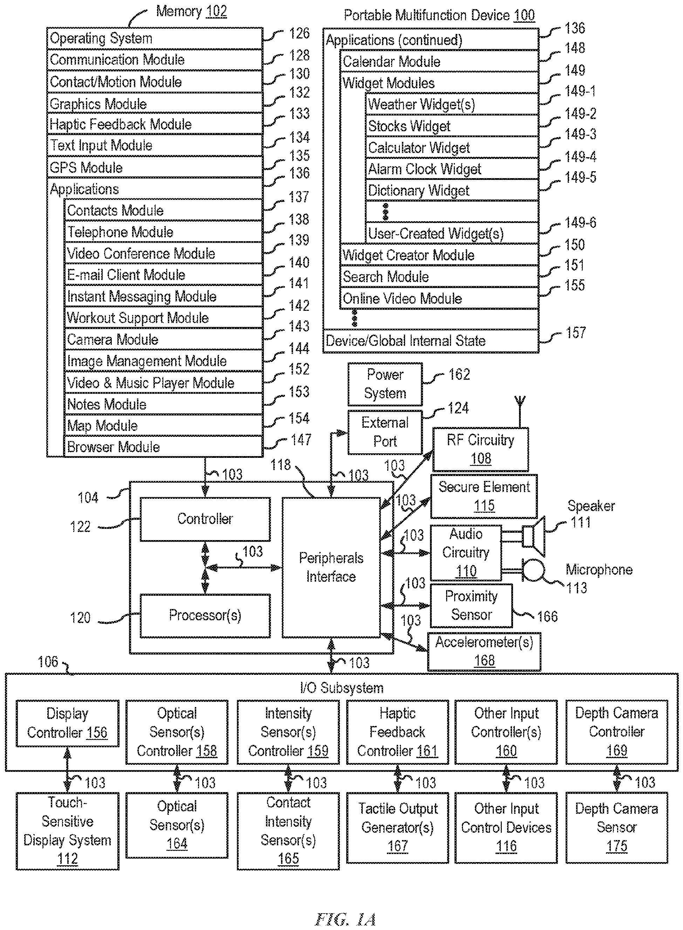

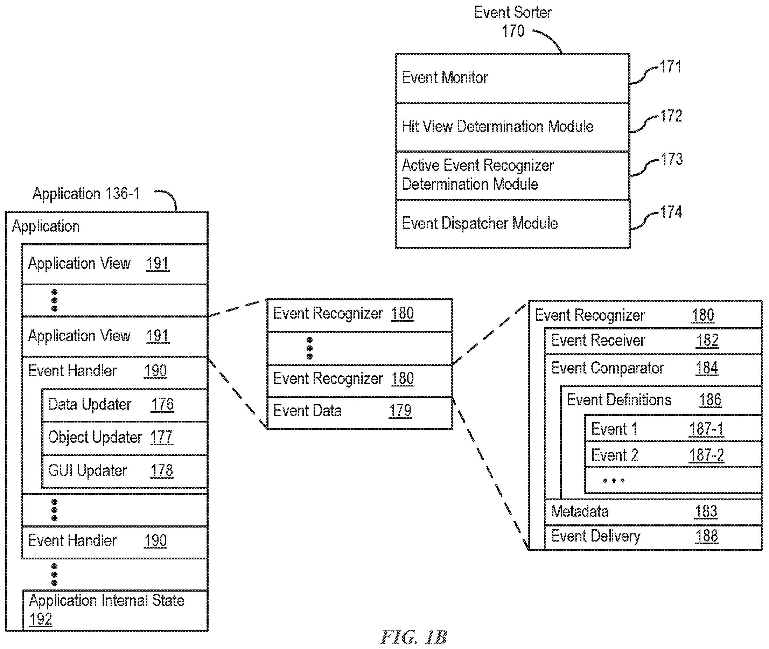

The operations in the information processing methods described above are, optionally, implemented by running one or more functional modules in an information processing apparatus such as general purpose processors (e.g., as described with respect to Figure 1A) or application specific chips. Further, the operations described above with reference to FIGS. 27A-27E are, optionally, implemented by components depicted in FIGS. 1A-1B. For example, detecting operation 2702, performing operation 2706, displaying operation 2712, and display operation 2746 are, optionally, implemented by event sorter 170, event recognizer 180, and event handler 190. Event monitor 171 in event sorter 170 detects a contact on touch-sensitive surface 604, and event dispatcher module 174 delivers the event information to application 136-1. A respective event recognizer 180 of application 136-1 compares the event information to respective event definitions 186, and determines whether a first contact at a first location on the touch-sensitive surface corresponds to a predefined event or sub-event, such as selection of an object on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in FIGS. 1A-1B.

## Claims

1. A method for providing biometrical authentication, comprising:
at an electronic device having one or more biometric sensors and a display:
while displaying a device state indicator, wherein the indicator indicates whether the device is in a locked or unlocked state, detecting (2702) a request, which can be made while the electronic device is locked or unlocked, to perform a respective operation that the device is not authorized to perform while the device is locked; and
in response (2704) to detecting the request to perform the respective operation:
in accordance (2706) with a determination that the device is unlocked when the device detects the request to perform the respective operation and the request includes a swipe starting from an edge of the display of the electronic device, performing the respective operation; and
in accordance (2708) with a determination that the device is locked and a first form of authentication is available for use, wherein the first form of authentication is a form of biometric authentication based on data obtained by the one or more biometric sensors, wherein the data corresponds to one or more facial features, displaying (2712), on the display, an authentication indicator for the first form of authentication without displaying one or more affordances for using a second form of authentication.

2. The method of claim 1, including, in response to detecting the request to perform the respective operation, in accordance with a determination that the device is locked and the first form of biometric authentication is not available for use, displaying one or more affordances for using the second form of authentication.

3. The method of any of claims 1-2 including:
while displaying the authentication indicator for the first form of authentication without displaying affordances for using the second form of authentication, processing respective data from the one or more biometric sensors; and
after processing the respective data from the one or more biometric sensors:
in accordance with a determination that the respective data from the one or more biometric sensors is consistent with biometric information that is authorized to perform the respective operation, performing the respective operation; and
in accordance with a determination that the respective data is not consistent with biometric information that is authorized to perform the respective operation, displaying one or more affordances for using the second form of authentication that were not displayed prior to processing the respective data from the one or more biometric sensors.

4. The method of claim 3, wherein displaying one or more affordances for using the second form of authentication that were not displayed prior to processing the respective data from the one or more biometric sensors includes:
in accordance with a determination that a biometric feature that corresponds to the first form of authentication is detected by the one or more biometric sensors, displaying the one or more affordances for using the second form of authentication after a first time period has elapsed; and
in accordance with a determination that no biometric feature that corresponds to the first form of authentication is detected by the one or more biometric sensors, displaying the one or more affordances for using the second form of authentication after a second time period has elapsed, wherein the second time period is different from the first time period.

5. The method of any of claims 1-4, wherein:
the request to perform a respective operation includes a home input; and
the respective operation includes displaying a home screen that includes a plurality of application icons for opening different applications.

6. The method of any of claims 1-5, wherein:
the request to perform a respective operation includes selection of a notification; and
the respective operation includes displaying an application user interface for an application that corresponds to the notification.

7. The method of any of claims 1-6, including, after displaying one or more affordances for using the second form of authentication that were not displayed prior to processing the respective data from the one or more biometric sensors:
in accordance with a determination that the request to perform the respective operation includes a home input, waiting for additional input for a first delay time period before ceasing to display the one or more affordances for using the second form of authentication; and
in accordance with a determination that the request to perform the respective operation includes selection of a notification, waiting for additional input for a second delay time period before ceasing to display the one or more affordances for using the second form of authentication, wherein the second delay time period is different from the first delay time period.

8. The method of any of claims 1-7, wherein displaying one or more affordances for using the second form of authentication that were not displayed prior to processing the respective data from the one or more biometric sensors includes:
in accordance with a determination that the request to perform the respective operation includes a home input, displaying a plurality of character entry keys for entering a sequence of characters for authentication; and
in accordance with a determination that the request to perform the respective operation includes selection of a notification, displaying a passcode affordance that, when activated causes display of a plurality of character entry keys for entering a sequence of characters for authentication.

9. The method of any of claims 1-8, including:
while the device is locked and a first form of authentication is available for use, attempting biometric authentication using the first form of authentication; and
while attempting the biometric authentication using the first form of authentication displaying a progress indicator that changes appearance to indicate progress toward biometric authentication using the first form of authentication.

10. The method of claim 9, including, after attempting the biometric authentication using the first form of authentication:
in accordance with a determination that the biometric authentication with the first form of authentication is successful updating the progress indicator in a first manner to indicate the successful authentication with the first form of authentication; and
in accordance with a determination that the biometric authentication with the first form of authentication detects a biometric feature that can be used in the first form of authentication but that is not consistent with authorized biometric features, updating the progress indicator in a second manner to indicate unsuccessful authentication, wherein the second manner of updating the progress indicator is different from the first manner of updating the progress indicator.

11. The method of any of claims 1-10, including, after attempting the biometric authentication using the first form of authentication for a first time:
displaying a user interface for the second form of authentication that includes a plurality of character entry keys for entering a sequence of characters for authentication;
while displaying the user interface for the second form of authentication, attempting the biometric authentication using the first form of authentication for a second time;
in accordance with a determination that the biometric authentication with the first form of authentication is successful, performing the respective operation;
in accordance with a determination that the biometric authentication with the first form of authentication detects a biometric feature that can be used in the first form of authentication but that is not consistent with authorized biometric features before receiving input entering less than a threshold number of characters via one or more of the plurality of character entry keys, forgoing performing the respective operation and generating a first tactile output that indicates an authentication failure displaying a graphical indication that a successful authentication has not occurred); and
in accordance with a determination that the biometric authentication with the first form of authentication detects a biometric feature that can be used in the first form of authentication but that is not consistent with authorized biometric features after receiving input entering at least the threshold number of characters via one or more of the plurality of character entry keys, forgoing performing the respective operation and displaying a graphical indication that a successful authentication has not occurred without generating a tactile output.

12. The method of any of claims 1-11, including:
while the device is in a locked state in which the device is not authorized to perform the respective operation, displaying a first graphical indication that indicates that the device is in the locked state; and
while the device is in an unlocked state in which the device is authorized to perform the respective operation, displaying a second graphical indication that indicates that the device is in the unlocked state in place of the first graphical indication.

13. The method of claim 12, including:
while the device is attempting the first form of authentication, replacing the first graphical indication with a progress indicator; and
after completing an attempt at the first form of authentication:
in accordance with a determination that the authentication was unsuccessful, replacing the progress indicator with the first graphical indication; and
in accordance with a determination that the authentication was successful, replacing the progress indicator with the second graphical indication.

14. A computer-readable storage medium storing one or more programs configured to be executed by one or more processors of an electronic device with one or more biometric sensors and a display, the one or more programs including instructions for performing the method of any of claims 1-13.

15. An electronic device, comprising:
one or more biometric devices;
a display;
one or more processors; and
memory storing one or more programs configured to be executed by the one or more processors, the one or more programs including instructions for performing the method of any of claims 1-13.

## Patentansprüche

1. Verfahren zum Bereitstellen einer biometrischen Authentifizierung, umfassend:
an einer elektronischen Vorrichtung, die einen oder mehrere biometrische Sensoren und eine Anzeige aufweist:
während eines Anzeigens eines Vorrichtungszustandsindikators, wobei der Indikator indiziert, ob sich die Vorrichtung in einem gesperrten oder entsperrten Zustand befindet, Erkennen (2702) einer Anforderung, die hergestellt werden kann, während die elektronische Vorrichtung gesperrt oder entsperrt ist, um einen jeweiligen Vorgang durchzuführen, dass die Vorrichtung nicht autorisiert ist, um durchzuführen, während die Vorrichtung gesperrt ist; und
als Reaktion (2704) auf das Erkennen der Anforderung, den entsprechenden Vorgang durchzuführen:
gemäß (2706) einer Bestimmung, dass die Vorrichtung entsperrt ist, wenn die Vorrichtung die Anforderung erkennt, um den jeweiligen Vorgang durchzuführen, und die Anforderung einen Wischen einschließt, das von einer Kante der Anzeige der elektronischen Vorrichtung ausgeht, Durchführen des jeweiligen Vorgangs; und
gemäß (2708) einer Bestimmung, dass die Vorrichtung gesperrt ist und eine erste Form einer Authentifizierung zur Verwendung verfügbar ist, wobei die erste Form der Authentifizierung eine Form einer biometrischen Authentifizierung basierend auf Daten ist, die durch den einen oder die mehreren biometrischen Sensoren erhalten werden, wobei die Daten einem oder mehreren Gesichtstmerkmalen entsprechen, Anzeigen (2712), auf der Anzeige, eines Authentifizierungsindikators für die erste Form der Authentifizierung ohne Anzeigen einer oder mehrerer Affordanzen zum Verwenden einer zweiten Form der Authentifizierung.

2. Verfahren nach Anspruch 1, das, als Reaktion auf das Erkennen der Anforderung, den jeweiligen Vorgang durchzuführen, gemäß einer Bestimmung, dass die Vorrichtung gesperrt ist und die erste Form der biometrischen Authentifizierung zur Verwendung nicht verfügbar ist, ein Anzeigen einer oder mehrerer Affordanzen zum Verwenden der zweiten Form der Authentifizierung einschließt.

3. Verfahren nach einem der Ansprüche 1 bis 2, das einschließt:
während des Anzeigens des Authentifizierungsindikators für die erste Form der Authentifizierung ohne Anzeigen von Affordanzen zum Verwenden der zweiten Form der Authentifizierung, Verarbeiten jeweiliger Daten von dem einen oder den mehreren biometrischen Sensoren; und
nach dem Verarbeiten der jeweiligen Daten von dem einen oder den mehreren biometrischen Sensoren:
gemäß einer Bestimmung, dass die jeweiligen Daten von dem einen oder den mehreren biometrischen Sensoren mit biometrischen Informationen übereinstimmen, die autorisiert sind, den jeweiligen Vorgang durchzuführen, Durchführen des jeweiligen Vorgangs; und
gemäß einer Bestimmung, dass die jeweiligen Daten mit biometrischen Informationen nicht übereinstimmen, die autorisiert sind, den jeweiligen Vorgang durchzuführen, Anzeigen einer oder mehrerer Affordanzen zum Verwenden der zweiten Form der Authentifizierung, die vor dem Verarbeiten der jeweiligen Daten von dem einen oder den mehreren biometrischen Sensoren nicht angezeigt wurden.

4. Verfahren nach Anspruch 3, wobei das Anzeigen einer oder mehrerer Affordanzen zum Verwenden der zweiten Form der Authentifizierung, die vor dem Verarbeiten der jeweiligen Daten von dem einen oder den mehreren biometrischen Sensoren nicht angezeigt wurden, einschließt:
gemäß einer Bestimmung, dass ein biometrisches Merkmal, das der ersten Form der Authentifizierung entspricht, durch den einen oder die mehreren biometrischen Sensoren erkannt wird, Anzeigen der einen oder der mehreren Affordanzen zum Verwenden der zweiten Form der Authentifizierung nachdem ein erster Zeitraum abgelaufen ist; und
gemäß einer Bestimmung, dass kein biometrisches Merkmal, das der ersten Form der Authentifizierung entspricht, durch den einen oder die mehreren biometrischen Sensoren erkannt wird, Anzeigen der einen oder der mehreren Affordanzen zum Verwenden der zweiten Form der Authentifizierung nachdem ein zweiter Zeitraum abgelaufen ist, wobei sich der zweite Zeitraum von dem ersten Zeitraum unterscheidet.

5. Verfahren nach einem der Ansprüche 1 bis 4, wobei:
die Anforderung, einen jeweiligen Vorgang durchzuführen, eine Starteingabe einschließt; und
der jeweilige Vorgang das Anzeigen eines Startbildschirms einschließt, der eine Vielzahl von Anwendungssymbole zum Öffnen unterschiedlicher Anwendungen einschließt.

6. Verfahren nach einem der Ansprüche 1 bis 5, wobei:
die Anforderung, einen jeweiligen Vorgang durchzuführen, eine Auswahl einer Benachrichtigung einschließt; und
der jeweilige Vorgang das Anzeigen einer Anwendungsbenutzerschnittstelle für eine Anwendung einschließt, die der Benachrichtigung entspricht.

7. Verfahren nach einem der Ansprüche 1 bis 6, das, nach dem Anzeigen einer oder mehrerer Affordanzen zum Verwenden der zweiten Form der Authentifizierung, die nicht vor dem Verarbeiten der jeweiligen Daten von dem einen oder den mehreren biometrischen Sensoren angezeigt wurden, einschließt:
gemäß einer Bestimmung, dass die Anforderung, den jeweiligen Vorgang durchzuführen, eine Starteingabe einschließt, Warten auf eine zusätzliche Eingabe für einen ersten Verzögerungszeitraum, bevor das Anzeigen der einen oder der mehreren Affordanzen zum Verwenden der zweiten Form der Authentifizierung beendet wird; und
gemäß einer Bestimmung, dass die Anforderung, den jeweiligen Vorgang durchzuführen, die Auswahl einer Benachrichtigung einschließt, Warten auf die zusätzliche Eingabe für einen zweiten Verzögerungszeitraum, bevor das Anzeigen der einen oder der mehreren Affordanzen zum Verwenden der zweiten Form der Authentifizierung beendet wird, wobei sich der zweite Verzögerungszeitraum von dem ersten Verzögerungszeitraum unterscheidet.

8. Verfahren nach einem der Ansprüche 1 bis 7, wobei das Anzeigen einer oder mehrerer Affordanzen zum Verwenden der zweiten Form der Authentifizierung, die vor dem Verarbeiten der jeweiligen Daten von dem einen oder den mehreren biometrischen Sensoren nicht angezeigt wurden, einschließt:
gemäß einer Bestimmung, dass die Anforderung, den jeweiligen Vorgang durchzuführen, eine Starteingabe einschließt, Anzeigen einer Vielzahl von Zeicheneintragsschlüsseln zum Eintragen einer Sequenz von Zeichen für die Authentifizierung, und
gemäß einer Bestimmung, dass die Anforderung, den jeweiligen Vorgang durchzuführen, die Auswahl einer Benachrichtigung einschließt, Anzeigen einer Passcode-Affordanz, die, wenn sie aktiviert ist, eine Anzeige einer Vielzahl von Zeicheneintrittsschlüsseln zum Eintragen einer Sequenz von Zeichen für die Authentifizierung veranlasst.

9. Verfahren nach einem der Ansprüche 1 bis 8, das einschließt:
während die Vorrichtung gesperrt ist und eine erste Form der Authentifizierung zur Verwendung verfügbar ist, Versuchen einer biometrischen Authentifizierung unter Verwendung der ersten Form der Authentifizierung, und
während dem Versuchen der biometrischen Authentifizierung unter Verwendung der ersten Form der Authentifizierung, Anzeigen eines Fortschrittsindikators, der das Erscheinungsbild ändert, um Fortschritte zu der biometrischen Authentifizierung unter Verwendung der ersten Form der Authentifizierung zu indizieren.

10. Verfahren nach Anspruch 9, das, nach dem Versuchen der biometrischen Authentifizierung unter Verwendung der ersten Form der Authentifizierung, einschließt:
gemäß einer Bestimmung, dass die biometrische Authentifizierung mit der ersten Form der Authentifizierung erfolgreich ist, Aktualisieren des Fortschrittsindikators auf eine erste Weise, um die erfolgreiche Authentifizierung mit der ersten Form der Authentifizierung zu indizieren; und
gemäß einer Bestimmung, dass die biometrische Authentifizierung mit der ersten Form der Authentifizierung ein biometrisches Merkmal erkennt, das in der ersten Form der Authentifizierung verwendet werden kann, aber mit autorisierten biometrischen Merkmalen nicht übereinstimmt, Aktualisieren des Fortschrittsindikators auf eine zweite Weise, um eine erfolgreiche Authentifizierung zu indizieren, wobei sich die zweite Weise des Aktualisierens des Fortschrittsindikators von der ersten Weise des Aktualisierens des Fortschrittsindikators unterscheidet.

11. Verfahren nach einem der Ansprüche 1 bis 10, das, nach dem Versuchen der biometrischen Authentifizierung unter Verwendung der ersten Form der Authentifizierung für ein erstes Mal, einschließt:
Anzeigen einer Benutzerschnittstelle für die zweite Form der Authentifizierung, die eine Vielzahl von Zeicheneintragsschlüsseln zum Eintragen einer Sequenz von Zeichen für die Authentifizierung einschließt;
während des Anzeigens der Benutzerschnittstelle für die zweite Form der Authentifizierung, Versuchen der biometrischen Authentifizierung unter Verwendung der ersten Form der Authentifizierung für ein zweites Mal;
gemäß einer Bestimmung, dass die biometrische Authentifizierung mit der ersten Form der Authentifizierung erfolgreich ist, Durchführen des jeweiligen Vorgangs;
gemäß einer Bestimmung, dass die biometrische Authentifizierung mit der ersten Form der Authentifizierung ein biometrisches Merkmal erkennt, das in der ersten Form der Authentifizierung verwendet werden kann, das aber mit autorisierten biometrischen Merkmalen nicht übereinstimmt, bevor die Eingabe empfangen wird, die weniger als eine Schwellenanzahl von Zeichen über eine oder mehrere der Vielzahl von Zeicheneintragsschlüsseln einträgt, Verzichten auf das Durchführen des jeweiligen Vorgangs und Erzeugen einer ersten taktilen Ausgabe, die einen Authentifizierungsfehler indiziert, der eine grafische Indikation anzeigt, dass eine erfolgreiche Authentifizierung nicht aufgetreten ist; und
gemäß einer Bestimmung, dass die biometrische Authentifizierung mit der ersten Form der Authentifizierung ein biometrisches Merkmal erkennt, das in der ersten Form der Authentifizierung verwendet werden kann, aber mit autorisierten biometrischen Merkmalen nicht übereinstimmt, nachdem die Eingabe empfangen wird, die mindestens die Schwellenanzahl von Zeichen über eine oder mehrere der Vielzahl von Zeicheneintragsschlüsseln einträgt, Verzichten auf das Durchführen des jeweiligen Vorgangs und Anzeigen eines grafischen Indikators, dass eine erfolgreiche Authentifizierung nicht aufgetreten ist, ohne eine taktile Ausgabe zu erzeugen.

12. Verfahren nach einem der Ansprüche 1 bis 11, das einschließt:
während sich die Vorrichtung in einem gesperrten Zustand befindet, in dem die Vorrichtung nicht autorisiert ist, den jeweiligen Vorgang durchzuführen, Anzeigen einer ersten grafischen Indikation, die indiziert, dass sich die Vorrichtung in dem gesperrten Zustand befindet, und
während sich die Vorrichtung in einem entsperrten Zustand befindet, in dem die Vorrichtung autorisiert ist, den jeweiligen Vorgang durchzuführen, Anzeigen einer zweiten grafischen Indikation, die indiziert, dass sich die Vorrichtung anstelle der ersten grafischen Indikation in dem entsperrten Zustand befindet.

13. Verfahren nach Anspruch 12, das einschließt:
während die Vorrichtung die erste Form der Authentifizierung versucht, Ersetzen der ersten grafischen Indikation durch einen Fortschrittsindikator; und
nach dem Abschließen eines Versuchs in der ersten Form der Authentifizierung:
gemäß einer Bestimmung, dass die Authentifizierung erfolglos war, Ersetzen des Fortschrittsindikators durch die erste grafische Indikation; und
gemäß einer Bestimmung, dass die Authentifizierung erfolgreich war, Ersetzen des Fortschrittsindikators durch die zweite grafische Indikation.

14. Computerlesbares Speicherungsmedium, das eines oder mehrere Programme speichert, die konfiguriert sind, um durch einen oder mehrere Prozessoren einer elektronischen Vorrichtung mit einem oder mehreren biometrischen Sensoren und einer Anzeige ausgeführt zu werden, wobei das eine oder die mehreren Programme Anweisungen zum Durchführen des Verfahrens nach einem der Ansprüche 1 bis 13 einschließen.

15. Elektronische Vorrichtung, umfassend:
einen oder mehrere biometrische Sensoren;
eine Anzeige;
einen oder mehrere Prozessoren; und
einen Speicher, der ein oder mehrere Programme speichert, die konfiguriert sind, um durch den einen oder die mehreren Prozessoren ausgeführt zu werden, wobei das eine oder die mehreren Programme Anweisungen zum Durchführen des Verfahrens nach einem der Ansprüche 1 bis 13 einschließen.

## Revendications

1. Procédé permettant de fournir une authentification biométrique, comprenant :
au niveau d'un dispositif électronique doté d'un ou plusieurs capteurs biométriques et un dispositif d'affichage :
lors de l'affichage d'un indicateur d'état de dispositif, dans lequel l'indicateur indique si le dispositif est dans un état verrouillé ou déverrouillé, la détection (2702) d'une demande, qui peut être faite tandis que le dispositif électronique est verrouillé ou déverrouillé, pour réaliser une opération respective que le dispositif n'est pas autorisé à réaliser pendant que le dispositif est verrouillé ; et
en réponse (2704) à la détection de la demande de réalisation de l'opération respective :
conformément (2706) à une détermination du fait que le dispositif est déverrouillé lorsque le dispositif détecte la demande de réalisation de l'opération respective et que la demande comporte un balayage commençant à partir d'un bord du dispositif d'affichage du dispositif électronique, la réalisation de l'opération respective ; et
conformément (2708) à une détermination du fait que le dispositif est verrouillé et qu'une première forme d'authentification est disponible pour utilisation, dans lequel la première forme d'authentification est une forme d'authentification biométrique sur la base de données obtenues par le ou les capteurs biométriques, dans lequel les données correspondent à une ou plusieurs caractéristiques faciales, l'affichage (2712), sur le dispositif d'affichage, d'un indicateur d'authentification pour la première forme d'authentification sans afficher une ou plusieurs capacités suggestives d'action permettant d'utiliser une seconde forme d'authentification.

2. Procédé selon la revendication 1, comportant, en réponse à la détection de la demande de réalisation de l'opération respective, conformément à une détermination du fait que le dispositif est verrouillé et que la première forme d'authentification biométrique n'est pas disponible pour utilisation, l'affichage d'une ou plusieurs capacités de suggestion permettant d'utiliser la seconde forme d'authentification.

3. Procédé selon l'une quelconque des revendications 1 à 2, comportant :
tout en affichant l'indicateur d'authentification pour la première forme d'authentification sans afficher des capacités suggestives d'action permettant d'utiliser la seconde forme d'authentification, le traitement de données respectives provenant du ou des capteurs biométriques ; et
après le traitement des données respectives provenant du ou des capteurs biométriques :
conformément à une détermination du fait que les données respectives provenant du ou des capteurs biométriques sont cohérentes avec des informations biométriques qui sont autorisées à réaliser l'opération respective, la réalisation de l'opération respective ; et
conformément à une détermination du fait que les données respectives ne sont pas cohérentes avec des informations biométriques qui sont autorisées à réaliser l'opération respective, l'affichage d'une ou plusieurs capacités suggestives d'action permettant d'utiliser la seconde forme d'authentification qui n'ont pas été affichées avant le traitement des données respectives provenant du ou des capteurs biométriques.

4. Procédé selon la revendication 3, dans lequel l'affichage d'une ou plusieurs capacités suggestives d'action permettant d'utiliser la seconde forme d'authentification qui n'ont pas été affichées avant traitement des données respectives provenant du ou des capteurs biométriques comporte :
conformément à une détermination du fait qu'une caractéristique biométrique qui correspond à la première forme d'authentification est détectée par le ou les capteurs biométriques, l'affichage de la ou des capacités suggestives d'action permettant d'utiliser la seconde forme d'authentification après qu'une première période de temps s'est écoulée ; et
conformément à une détermination du fait qu'aucune caractéristique biométrique qui correspond à la première forme d'authentification n'est détectée par le ou les capteurs biométriques, l'affichage de la ou des capacités suggestives d'action permettant d'utiliser la seconde forme d'authentification après qu'une seconde période de temps s'est écoulée, dans lequel la seconde période de temps est différente de la première période de temps.

5. Procédé selon l'une quelconque des revendications 1 à 4, dans lequel :
la demande de réalisation d'une opération respective comporte une entrée domestique ; et
l'opération respective comporte l'affichage d'un écran d'accueil qui comporte une pluralité d'icônes d'application permettant d'ouvrir des applications différentes.

6. Procédé selon l'une quelconque des revendications 1 à 5, dans lequel :
la demande de réalisation d'une opération respective comporte la sélection d'une notification ; et
l'opération respective comporte l'affichage d'une interface utilisateur d'application pour une application qui correspond à la notification.

7. Procédé selon l'une quelconque des revendications 1 à 6, comportant, après l'affichage d'une ou plusieurs capacités suggestives d'action permettant d'utiliser la seconde forme d'authentification qui n'était pas affichée avant le traitement des données respectives provenant du ou des capteurs biométriques :
conformément à une détermination du fait que la demande de réalisation de l'opération respective comporte une entrée domestique, l'attente d'une entrée supplémentaire pendant une première période de temps de retard avant l'arrêt de l'affichage de la ou des capacités de suggestion permettant d'utiliser la seconde forme d'authentification ; et
conformément à une détermination du fait que la demande de réalisation de l'opération respective comporte la sélection d'une notification, l'attente d'une entrée supplémentaire pendant une seconde période de temps de retard avant l'arrêt de l'affichage de la ou des capacités suggestives d'action permettant d'utiliser la seconde forme d'authentification, dans lequel la seconde période de temps de retard est différente de la première période de temps de retard.

8. Procédé selon l'une quelconque des revendications 1 à 7, dans lequel l'affichage d'une ou plusieurs capacités suggestives d'action permettant d'utiliser la seconde forme d'authentification qui n'ont pas été affichées avant traitement des données respectives provenant du ou des capteurs biométriques comporte :
conformément à une détermination du fait que la demande de réalisation de l'opération respective comporte une entrée domestique, l'affichage d'une pluralité de clés d'entrée de caractères permettant d'entrer une séquence de caractères pour authentification ; et
conformément à une détermination du fait que la demande de réalisation de l'opération respective comporte la sélection d'une notification, l'affichage d'une capacité suggestive d'action de code de déverrouillage qui, lorsqu'elle est activée, amène l'affichage d'une pluralité de clés d'entrée de caractères permettant d'entrer une séquence de caractères pour authentification.

9. Procédé selon l'une quelconque des revendications 1 à 8, comportant :
tandis que le dispositif est verrouillé et qu'une première forme d'authentification est disponible pour utilisation, la tentative d'authentification biométrique à l'aide de la première forme d'authentification ; et
lors de la tentative de l'authentification biométrique à l'aide de la première forme d'authentification, l'affichage d'un indicateur de progression qui change d'apparence pour indiquer une progression vers une authentification biométrique à l'aide de la première forme d'authentification.

10. Procédé selon la revendication 9, comportant, après tentative de l'authentification biométrique à l'aide de la première forme d'authentification :
conformément à une détermination du fait que l'authentification biométrique avec la première forme d'authentification est réussie, la mise à jour de l'indicateur de progression d'une première manière pour indiquer l'authentification réussie avec la première forme d'authentification ; et
conformément à une détermination du fait que l'authentification biométrique avec la première forme d'authentification détecte une caractéristique biométrique qui peut être utilisée dans la première forme d'authentification, mais qui n'est pas conforme aux caractéristiques biométriques autorisées, la mise à jour de l'indicateur de progression d'une seconde manière pour indiquer une authentification infructueuse, dans lequel la seconde manière de mettre à jour l'indicateur de progression est différente de la première manière de mettre à jour l'indicateur de progression.

11. Procédé selon l'une quelconque des revendications 1 à 10, comportant, après la tentative de l'authentification biométrique à l'aide de la première forme d'authentification pour une première fois :
l'affichage d'une interface utilisateur pour la seconde forme d'authentification qui comporte une pluralité de clés d'entrée de caractères permettant d'entrer une séquence de caractères pour authentification ;
lors de l'affichage de l'interface utilisateur pour la seconde forme d'authentification, la tentative de l'authentification biométrique à l'aide de la première forme d'authentification pour une seconde fois ;
conformément à une détermination du fait que l'authentification biométrique avec la première forme d'authentification est réussie, la réalisation de l'opération respective ;
conformément à une détermination du fait que l'authentification biométrique avec la première forme d'authentification détecte une caractéristique biométrique qui peut être utilisée dans la première forme d'authentification mais qui n'est pas compatible avec des caractéristiques biométriques autorisées avant réception d'une entrée entrant moins d'un nombre seuil de caractères par l'intermédiaire d'une ou plusieurs parmi la pluralité de clés d'entrée de caractères, l'abandon de l'opération respective et la génération d'une première sortie tactile qui indique un échec d'authentification affichant une indication graphique indiquant qu'une authentification réussie n'a pas eu lieu) ; et
conformément à une détermination du fait que l'authentification biométrique avec la première forme d'authentification détecte une caractéristique biométrique qui peut être utilisée dans la première forme d'authentification mais qui n'est pas compatible avec des caractéristiques biométriques autorisées après réception d'une entrée entrant au moins le nombre seuil de caractères par l'intermédiaire d'une ou plusieurs parmi la pluralité de clés d'entrée de caractères, la réalisation de l'opération respective et l'affichage d'une indication graphique indiquant qu'une authentification réussie n'a pas eu lieu sans générer de sortie tactile.

12. Procédé selon l'une quelconque des revendications 1 à 11, comportant :
tandis que le dispositif est dans un état verrouillé dans lequel le dispositif n'est pas autorisé à réaliser l'opération respective, l'affichage d'une première indication graphique qui indique que le dispositif est dans l'état verrouillé ; et
tandis que le dispositif est dans un état déverrouillé dans lequel le dispositif est autorisé à réaliser l'opération respective, l'affichage d'une seconde indication graphique qui indique que le dispositif est dans l'état déverrouillé à la place de la première indication graphique.

13. Procédé selon la revendication 12, comportant :
tandis que le dispositif tente la première forme d'authentification, le remplacement de la première indication graphique par un indicateur de progression ; et
après achèvement d'une tentative à la première forme d'authentification :
conformément à une détermination du fait que l'authentification a échoué, le remplacement de l'indicateur de progression par la première indication graphique ; et
conformément à une détermination du fait que l'authentification a réussi, le remplacement de l'indicateur de progression par la seconde indication graphique.

14. Support de stockage lisible par ordinateur stockant un ou plusieurs programmes configurés pour être exécutés par un ou plusieurs processeurs d'un dispositif électronique avec un ou plusieurs capteurs biométriques et un dispositif d'affichage, le ou les programmes comportant des instructions permettant de mettre en oeuvre le procédé selon l'une quelconque des revendications 1 à 13.

15. Dispositif électronique, comprenant :
un ou plusieurs dispositifs biométriques ;
un dispositif d' affichage ;
un ou plusieurs processeurs ; et
la mémoire stockant un ou plusieurs programmes configurés pour être exécutés par le ou les processeurs, le ou les programmes comportant des instructions permettant de mettre en oeuvre le procédé selon l'une quelconque des revendications 1 à 13.
